(19) Europäisches Patentamt
European Patent Office
Office européen des brevets

(11) **EP 4 238 943 B1**

(12) **EUROPEAN PATENT SPECIFICATION**

(45) Date of publication and mention
of the grant of the patent:
**09.10.2024 Bulletin 2024/41**

(21) Application number: **23155567.3**

(22) Date of filing: **08.02.2023**

(51) International Patent Classification (IPC):
**C03C 3/087** (2006.01)    **C03C 3/089** (2006.01)
**C03C 3/095** (2006.01)    **C03C 3/097** (2006.01)

(52) Cooperative Patent Classification (CPC):
**C03C 3/089; C03C 3/087; C03C 3/095; C03C 3/097**

(54) **GLASS FOR MEMORY RECORDING MEDIA**

GLAS FÜR SPEICHERAUFZEICHNUNGSMEDIUM

VERRE POUR SUPPORTS D'ENREGISTREMENT À MÉMOIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.02.2022 US 202263308130 P
16.02.2022 NL 2030965**

(43) Date of publication of application:
**06.09.2023 Bulletin 2023/36**

(73) Proprietor: **Corning Incorporated
Corning, New York 14831 (US)**

(72) Inventors:
• **Lamberson, Lisa Ann
CORNING, 14831 (US)**
• **Lezzi, Peter Joseph
CORNING, 14831 (US)**
• **Pierson-Stull, Michelle Diane
CORNING, 14831 (US)**
• **Priven, Alexander I.
CORNING, 14831 (US)**
• **Smith, Liping Xiong
CORNING, 14831 (US)**

(74) Representative: **Arnold & Siedsma
Bezuidenhoutseweg 57
2594 AC The Hague (NL)**

(56) References cited:
**CN-A- 102 898 022    US-A1- 2019 127 265
US-A1- 2019 161 390    US-A1- 2020 199 013
US-A1- 2020 199 019**

**Description**

**FIELD**

The present specification generally relates to glass compositions suitable for use as substrate material for electronic devices. More specifically, the present specification is directed to substrate materials for memory recording disks suitable for the Heat Assisted Magnetic Recording (HAMR) process.

**BACKGROUND**

The industry is continuously requiring the ability to store more and more data. In order to accommodate this need for increased data storage, the industry is having to make shifts in the way they store data on disks. In order to get around physics barriers, they have moved to a new technology called Heat Assisted Magnetic Recording (HAMR). With this technology, data storage is accomplished by heating up small areas of the magnetic memory material to write the data and rapidly cooling the magnetic memory material to store the data in a more stable phase. The substrate used to support the magnetic memory material in current magnetic disk technology is aluminum. With the transition to HAMR technology, however, aluminum will no longer be a viable substrate because it does not have the ability to function at the temperatures, such as about 700°C or greater, necessary for writing data with the HAMR technology. Therefore, a need exists for new substrate materials, such as glass, that are resistant to high temperatures, have higher rigidity and smooth, flat surfaces, and high resistance to fast cooling and heating (or thermal shock resistance), which, in turn, requires low coefficient of thermal expansion.

The document US 2020/199019 A1 describes glasses.

**SUMMARY**

In an embodiment of the present disclosure, a glass comprises a plurality of components, the glass having a composition of the components comprising greater than or equal to 60.0 mol.% and less than or equal to 80.0 mol.% $SiO_2$, greater than or equal to 10.0 mol.% and less than or equal to 18.0 mol.% $Al_2O_3$, greater than or equal to 0.5 mol.% and less than or equal to 7.5 mol.% $Li_2O$, greater than or equal to 0.0 mol.% and less than or equal to 0.5 mol.% $ZrO_2$, greater than or equal to 0.0 mol.% and less than or equal to 3.0 mol.% $RE_mO_n$, greater than or equal to 0.0 at.% and less than or equal to 0.5 at.% F and may optionally contain one or more components selected from $P_2O_5$, $B_2O_3$, MgO, CaO, BaO, ZnO, MnO, $Na_2O$, $K_2O$, $Fe_2O_3$, FeO, $Cu_2O$, $Rb_2O$, $Ag_2O$, $Cs_2O$, $Au_2O$, $Hg_2O$, $Tl_2O$, BeO, CoO, NiO, CuO, SrO, CdO, SnO, PbO and $TiO_2$, wherein the composition of the components satisfies the condition: $0.00 \leq min(RE_mO_n,P_2O_5)$ [mol.%] $\leq 0.30$, and wherein the glass has a cristobalite precipitation parameter $P_{crist}$ that is less than or equal to 28, an anorthite precipitation parameter $P_{anort}$ that is less than or equal to 10, a cordierite precipitation parameter $P_{cord}$ that is less than or equal to 5.0 and a spodumene precipitation parameter $P_{spod}$ that is less than or equal to 7.5, and wherein the glass satisfies the conditions: $P_{spm} > 32$, $P_{anpt} > 680$ and $P_{160kP} > 1200$, where $P_{anpt}$ is an annealing point parameter, calculated from the glass composition in terms of mol.% of the components according to the Formula (IX):

$$P_{anpt} = 664.7 + 5.2303 * SiO_2 - 11.493 * B_2O_3 - 7.1742 * P_2O_5 + 8.3980 * ZrO_2 - 2.0585 * MgO - 2.1088 * CaO - 3.8995 * BaO - 10.323 * ZnO - 9.0727 * MnO - 23.455 * Li_2O - 33.819 * Na_2O - 25.204 * K_2O + 15.745 * Y_2O_3 + 8.9047 * La_2O_3 - 33.960 * (Fe_2O_3 + FeO) - 5.6704 * (R_2O + RO - Al_2O_3) - 4.2545 * (SiO_2 - (6 * K_2O + 6 * Na_2O + 4 * Li_2O + 2 * RO)) - 19.439 * Cu_2O, \tag{IX}$$

$P_{spm}$ is a specific modulus parameter, calculated from the glass composition in terms of mol.% of the components according to the Formula (X):

$$P_{spm} = 32.10 + 0.47744 * SiO_2 - 1.6506 * Al_2O_3 - 0.11775 * B_2O_3 - 0.30166 * P_2O_5 + 0.20187 * TiO_2 + 0.20219 * ZrO_2 + 0.96268 * MgO + 0.83379 * CaO + 0.53685 * SrO + 0.41218 * BaO + 0.63264 * ZnO + 0.75365 * MnO + 0.62984 * CuO - 1.2496 * Na_2O - 1.5154 * K_2O + 1.4746 * Cu_2O - 0.037941 * Y_2O_3 - 0.75836 * La_2O_3 - 1.8052 * (R_2O + RO - Al_2O_3) - 0.47488 * (SiO_2 - (6 * K_2O + 6 * Na_2O + 4 * Li_2O + 2 * RO)), \tag{X}$$

$P_{160kP}$ is a parameter predicting a temperature at which a viscosity of the glass is 160 kP, calculated from the glass composition in terms of mol.% of the components according to the Formula (XI):

$$P_{160kP} = 1058 + 2.5492 * SiO_2 - 25.725 * Al_2O_3 - 11.327 * B_2O_5 - 14.309 * TiO_2 - 11.594 * ZrO_2 +$$
$$30.559 * MgO + 29.290 * CaO + 30.592 * SrO + 30.079 * BaO + 23.323 * ZnO + 19.724 * MnO +$$
$$11.888 * PbO + 11.462 * CuO + 17.090 * Li_2O + 16.475 * Na_2O + 11.386 * K_2O + 14.422 * Y_2O_3 -$$
$$36.909* La_2O_3 - 34.144 * (Fe_2O_3 + FeO) - 35.001 * (R_2O + RO - Al_2O_3),$$
$$(XI)$$

$P_{crist}$ is calculated from the glass composition in terms of mol.% of the components according to the Formula (VI):

$$P_{crist} = SiO_2 - 6 * (Na_2O + K_2O) - 4 * Li_2O - 2 * (CaO + SrO + BaO) - 2.5 * MgO, \quad (VI)$$

$P_{anort}$ is calculated from the glass composition in terms of mol.% of the components according to the Formula (I):

$$P_{anort} = min(CaO + SrO + 0.5 * BaO + Na_2O + 0.5 * K_2O, Al_2O_3), \quad (I)$$

$P_{cord}$ is calculated from the glass composition in terms of mol.% of the components according to the Formula (III):

$$P_{cord} = MgO + MnO + FeO, \quad (III)$$

$P_{spod}$ is calculated from the glass composition in terms of mol.% of the components according to the Formula (IV):

$$P_{spod} = min(Li_2O, Al_2O_3 - K_2O - 0.5 * Na_2O), \quad (IV)$$

where $R_2O$ is a total sum of monovalent metal oxides, RO is a total sum of divalent metal oxides, $RE_mO_n$ is a total sum of rare earth metal oxides in all redox states present, and an asterisk (*) means multiplication.

These and other aspects, objects, and features of the present disclosure will be understood and appreciated by those skilled in the art upon studying the following specification, claims, and appended drawings.

## BRIEF DESCRIPTION OF THE DRAWINGS

FIG. 1 is a plot illustrating the relationship between the annealing point An.P. and the annealing point parameter $P_{anpt}$ calculated by formula (IX) for some Comparative Glasses and some Exemplary Glasses according to an embodiment of the present disclosure.

FIG. 2 is a plot illustrating the relationship between the specific modulus $E/d_{RT}$ and the specific modulus parameter $P_{spm}$ calculated by formula (X) for some Comparative Glasses and some Exemplary Glasses according to an embodiment of the present disclosure.

FIG. 3 is a plot illustrating the relationship between $T_{160kP}$, the temperature at which the glass has a viscosity of 160 kP, and a parameter $P_{160kP}$ calculated by formula (XI) that predicts the temperature at which the glass has a viscosity of 160 kP for some Comparative Glasses and some Exemplary Glasses according to an embodiment of the present disclosure.

FIG. 4 is a plot illustrating the relationship between the parameter $P_{160kP}$ and the specific modulus parameter $P_{spm}$ for some Comparative Glasses and some Exemplary Glasses according to an embodiment of the present disclosure.

FIG. 5 is a plot illustrating the relationship between the temperature s $T_{160kP}$ and the specific modulus $E/d_{RT}$ for some Comparative Glasses and some Exemplary Glasses according to an embodiment of the present disclosure.

## DETAILED DESCRIPTION

In the following detailed description, for purposes of explanation and not limitation, example embodiments disclosing specific details are set forth to provide a thorough understanding of various principles of the present disclosure. However, it will be apparent to one having ordinary skill in the art, having had the benefit of the present disclosure, that the present disclosure may be practiced in other embodiments that depart from the specific details disclosed herein.

Moreover, descriptions of well-known devices, methods and materials may be omitted so as not to obscure the description of various principles of the present disclosure. Finally, wherever applicable, like reference numerals refer to like elements.

Unless otherwise expressly stated, it is in no way intended that any method set forth herein be construed as requiring that its steps be performed in a specific order. Accordingly, where a method claim does not actually recite an order to be followed by its steps, or it is not otherwise specifically stated in the claims or descriptions that the steps are to be limited to a specific order, it is in no way intended that an order be inferred, in any respect. This holds for any possible non-express basis for interpretation, including, without limitation, matters of logic with respect to arrangement of steps or operational flow; plain meaning derived from grammatical organization or punctuation; the number or type of embodiments described in the specification.

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

Modifications of the disclosure will occur to those skilled in the art and to those who make or use the disclosure. Therefore, it is understood that the embodiments shown in the drawings and described above are merely for illustrative purposes and not intended to limit the scope of the disclosure, which is defined by the following claims, as interpreted according to the principles of patent law, including the doctrine of equivalents.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those skilled in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The term "component" refers to a material or compound present in a glass composition. Components include oxides, including but not limited to those expressed in Formulas (I), and (II), and the claims. Representative components include $B_2O_3$, $P_2O_5$, $Al_2O_3$, $CuO$, $Cu_2O$, $RO$, $R_2O$, $SnO_2$, $MnO_2$, $RE_mO_n$, $SiO_2$, $Ta_2O_5$, $ZnO$, $WO_3$, $Nb_2O_5$, $TiO_2$, $ZrO_2$, $Bi_2O_3$, $TeO_2$, etc. Other representative components include halogens (e.g. F, Br, Cl). Whenever a component is included as a term in a mathematical expression or formula, it is understood that the component refers to the amount of the component in units of mol.% in the composition of the glass. For example, the expression "$B_2O_3 + P_2O_5$" refers to the sum of the amount of $B_2O_3$ in units of mol.% and the amount of $P_2O_5$ in units of mol.% in the composition of the glass. A mathematical expression or formula is any expression or formula that includes a mathematical operator such as "+", "-", "*", "/", "min", or "max".

The term "formed from" can mean one or more of comprises, consists essentially of, or consists of. For example, a component that is formed from a particular material can comprise the particular material, consist essentially of the particular material, or consist of the particular material.

The terms "free" and "substantially free" are used interchangeably herein to refer to an amount and/or an absence of a particular component in a glass composition that is not intentionally added to the glass composition. It is understood that the glass composition may contain traces of a particular constituent component as a contaminant or a tramp in an amount of less than 0.10 mol.%.

As used herein, the term "tramp", when used to describe a particular constituent component in a glass composition, refers to a constituent component that is not intentionally added to the glass composition and is present in an amount of less than 0.10 mol.%. Tramp components may be unintentionally added to the glass composition as an impurity in another constituent component and/or through migration of the tramp component into the composition during processing of the glass composition.

Unless otherwise specified, the term "glass" is used to refer to a glass made from a glass composition disclosed herein.

The symbol " * " means multiplication when used in any formula herein.

The term "log" means logarithm in base 10.

Temperature is expressed herein in units of °C (degrees Celsius).

The term "room temperature" refers to a temperature in a range from 20 °C to 25 °C.

Viscosity is expressed herein in units of P (Poise). The term "kP" means kiloPoise.

The term "glass former" is used herein to refer to a component that, being solely present in the glass composition (i.e., without other components, except for tramps), is able to form a glass when cooling the melt at a rate of not greater than about 300 °C/min.

The term "modifier", as used herein, refers to the oxides of monovalent or divalent metals, i.e., $R_2O$ or $RO$, where "R" stands for a cation. Modifiers can be added to a glass composition to change the atomic structure of the melt and the resulting glass. In some embodiments, the modifier may change the coordination numbers of cations present in the glass formers (e.g., boron in $B_2O_3$), which may result in forming a more polymerized atomic network and, as a result, may provide better glass formation.

As used herein, the term "RO" refers to a total content of divalent metal oxides (in mol.%), the term "$R_2O$" refers to a total content of monovalent metal oxides (in mol.%), and the term "$Alk_2O$" refers to a total content of alkali metal oxides (in mol.%). The term $R_2O$ encompasses alkali metal oxides ($Alk_2O$), in addition to other monovalent metal oxides, such as $Ag_2O$, $Tl_2O$, and $Hg_2O$, for example. As discussed below, in the present disclosure, a rare earth metal oxide is referred to herein by its normalized formula ($RE_2O_3$) in which the rare earth metal RE has the redox state "+3," and thus rare earth metal oxides are not encompassed by the term RO.

As used herein, the term "rare earth metals" refers to the metals listed in the Lanthanide Series of the IUPAC Periodic Table, plus yttrium and scandium. As used herein, the term "rare earth metal oxides," is used to refer to the oxides of rare earth metals in different redox states, such as "+3" for lanthanum in $La_2O_3$, "+4" for cerium in $CeO_2$, "+2" for europium in EuO, etc. In general, the redox states of rare earth metals in oxide glasses may vary and, in particular, the redox state may change during melting, based on the composition and/or the redox conditions in the furnace where the glass is melted and/or heat-treated (e.g., annealed). Unless otherwise specified, a rare earth metal oxide component is referred to herein by its normalized formula in which the rare earth metal has the redox state "+3." Accordingly, in the case in which a rare earth metal having a redox state other than "+3" is added to the glass composition batch, the batch composition is recalculated by adding or removing some oxygen to maintain the stoichiometry. For example, when $CeO_2$ (with cerium in redox state "+4") is used as a component, the resulting as-batched composition is recalculated assuming that two moles of $CeO_2$ is equivalent to one mole of $Ce_2O_3$, and the resulting as-batched composition is expressed in terms of $Ce_2O_3$. As used herein, the term "$RE_mO_n$" is used to refer to the total content (in mol.%) of rare earth metal oxides in all redox states present, and the term "$RE_2O_3$" is used to refer to the total content (in mol. %) of rare earth metal oxides in the "+3" redox state, also specified as "trivalent equivalent".

Unless otherwise specified, the composition of all components in a glass are expressed in terms of mole percent (mol.%) in the glass. The composition of components in the glasses reported herein were determined by chemical analysis of the glass. The composition of $B_2O_3$ was determined using ICP (inductively coupled plasma). The composition of $Li_2O$ was determined using FES (fluorescence excitation spectroscopy). The composition of all other components was determined using XRF (x-ray fluorescence spectroscopy). For the avoidance of doubt, "composition" or "glass composition" as reported herein refers to the composition of the components in final glass articles and is distinguished from batch composition. As will be understood by those having ordinary skill in the art, the composition of final glass articles may differ from the batch composition used to form the final glass article due, for example, to the fact that various melt constituents (e.g., fluorine, alkali metals, boron, etc.) may be subject to different levels of volatilization (e.g., as a function of vapor pressure, melt time and/or melt temperature) during melting of the constituents in the process of forming the final glass article. Notwithstanding the foregoing, the difference between the composition of final glass articles and the batch composition is expected to be small.

In the case when fluorine or other halogen (chlorine, bromine, and/or iodine) is added to or is present in an oxide glass, the molecular representation of the resulting glass composition may be expressed in different ways. In the present disclosure, the content of fluorine as a single term, when present, is expressed in terms of atomic percent (at.%), which is determined based on the fraction of fluorine in a total sum of all atoms in a glass composition multiplied by a factor of 100.

In the present disclosure, the following method of representation of fluorine-containing compositions and concentration ranges is used. The concentration limits for all oxides (e.g. $SiO_2$, $B_2O_3$, $Na_2O$, etc.) are presented under the assumption that the respective cations (such as, for example, silicon [$Si^{4+}$], boron [$B^{3+}$], sodium [$Na^+$], etc.) are initially presented in the form of the corresponding oxides. When fluorine is present, for the purposes of calculating the concentration of components of the composition, some part of the oxygen in the oxide is equivalently replaced with fluorine (i.e. one atom of oxygen is replaced with two atoms of fluorine). The fluorine is assumed to be present in the form of silicon fluoride ($SiF_4$); accordingly, the total sum of all oxides plus $SiF_4$ is assumed to be 100 mole percent or 100 weight percent in all compositions.

The density of the glasses at room temperature was determined using the buoyancy method of ASTM C693-93(2013). The estimated error of the density measurements was 0.001 $g/cm^3$.

The term "liquidus temperature" ($T_{Liq}$) is used herein to refer to a temperature above which the glass composition is completely liquid with no crystallization of constituent components of the glass. Unless otherwise specified, liquidus temperature was measured in accordance with ASTM C829-81 (2015), titled "Standard Practice for Measurement of Liquidus Temperature of Glass by the Gradient Furnace Method."

As used herein, the term "liquidus viscosity" ($\eta_{liq}$) refers to the viscosity of a molten glass at the liquidus temperature. Unless specified otherwise, a liquidus viscosity value disclosed in this application is determined by the following method. First, the liquidus temperature of the glass is measured in accordance with ASTM C829-81 (2015), titled "Standard Practice for Measurement of Liquidus Temperature of Glass by the Gradient Furnace Method." Next, the viscosity of the glass at the liquidus temperature is measured in accordance with ASTM C965-96 (2012), titled "Standard Practice for Measuring Viscosity of Glass Above the Softening Point". The term "Vogel-Fulcher-Tammann (VFT) relation," as used herein, describes the temperature dependence of the viscosity and is represented by the following equation:

$$\log(\eta) = A + B / (T - T_0)$$

where $\eta$ is viscosity, and A, B and $T_0$ are empirical parameters. To determine A, B, and $T_0$, the viscosity of the glass composition is measured over a given temperature range. The raw data of viscosity versus temperature is then fit with the VFT equation by least-squares fitting to obtain A, B, and $T_0$. With these values, a viscosity point (e.g., 200 P Temperature, 35000 P Temperature, and 200000 P Temperature) at any temperature above the softening point may be calculated.

The term "$\alpha$," or "$\alpha_{20-300}$," as used herein, refers to the average coefficient of linear thermal expansion (CTE) of the glass composition over a temperature range from 20 °C to 300 °C. CTE is expressed in units of $10^{-7}/°C$ and is measured by using a horizontal dilatometer (push-rod dilatometer) in accordance with ASTM E228-11. The numeric measure of $\alpha$ is a linear average value in a specified temperature range $\Delta T$ (e.g., 20 °C to 300 °C) expressed as $\alpha = \Delta L/(L_0 \Delta T)$, where $L_0$ is the linear size of a sample at some temperature within or near the measured range, and L is the change in the linear size ($\Delta L$) in the measured temperature range $\Delta T$.

The terms "modulus" and "elastic modulus" refer to Young's modulus at room temperature. The Young's modulus E, shear modulus (G), and the Poisson's ratio ($\mu$) are measured by Resonant Ultrasound Spectroscopy at room temperature, using a Quasar RUSpec 4000 available from ITW Indiana Private Limited, Magnaflux Division using the technique set forth in ASTM E2001-13, titled "Standard Guide for Resonant Ultrasound Spectroscopy for Defect Detection in Both Metallic and Non-metallic Parts.".

The glass transition temperature ($T_g$) is measured by differential scanning calorimeter (DSC) by heating glass samples initially at room temperature at a rate of 10 K/min .

The term "softening point" ($T_{soft}$) refers to the temperature at which the viscosity of the glass composition is $10^{7.6}$ Poise. The softening point of the glass compositions was determined using the fiber elongation method of ASTM C336-71(2015) or a parallel plate viscosity (PPV) method which measures the viscosity of inorganic glass from $10^7$ to $10^9$ poise as a function of temperature, similar to ASTM C1351M.

The term "annealing point" (An.P.) refers to the temperature determined according to ASTM C598-93(2013), at which the viscosity of a glass is approximately $10^{13.2}$ Poise.

The terms "strain point" and "Tstrain" refer to the temperature determined according to ASTM C598-93, at which the viscosity of a glass at a given glass composition is approximately $10^{14.7}$ Poise.

In the mathematical formulas used in the present disclosure, the term "min(A, B)" means the lesser of the values A and B, and the term "max(A, B)" means the greater of the quantities A and B, where "A" and "B" may be any quantities (concentrations of components, values of properties, etc.) The term "abs(X)" means absolute value of a quantity X.

The glass composition includes silica ($SiO_2$). In embodiments of the glass compositions disclosed herein, $SiO_2$ is the primary constituent of the glass network. Pure $SiO_2$ has a relatively high specific modulus, a low CTE, and a high annealing point. However, pure $SiO_2$ also has a high melting point. If the concentration of $SiO_2$ in a glass composition is too high, the formability of the glass composition may be diminished as high concentrations of $SiO_2$ increase the difficulty in melting the glass, which, in turn, adversely impacts the formability of the glass. Accordingly, the content of silica is limited. In embodiments, the glass composition contains silica ($SiO_2$) in an amount from greater than or equal to 60.0 mol% to less than or equal to 80.0 04.0 mol.% and all ranges and sub-ranges between the foregoing values. In some embodiments, the glass composition may contain $SiO_2$ in an amount greater than or equal to 63.9 mol.%, greater than or equal to 64.5 mol.%, greater than or equal to 69.0 mol.%, greater than or equal to 70.0 mol.%, greater than or equal to 74.0 mol.%, or greater than or equal to 79.0 mol.%. In some other embodiments, the glass composition may contain $SiO_2$ in an amount less than or equal to 79.0 mol.%, less than or equal to 75.0 mol.%, less than or equal to 74.4 mol.%, less than or equal to 74.0 mol.%, less than or equal to 70.0 mol.%, or less than or equal to 69.0 mol%. In some more embodiments, the glass composition may contain $SiO_2$ in an amount greater than or equal to 60.0 mol.% and less than or equal to 75.0 mol.%, greater than or equal to 63.9 mol.% and less than or equal to 74.4 mol.%, greater than or equal to 64.5 mol.% and less than or equal to 74.5 mol.%, greater than or equal to 60.0 mol.% and less than or equal to 69.0 mol.%, greater than or equal to 63.9 mol.% and less than or equal to 69.0 mol.%, greater than or equal to 64.5 mol.% and less than or equal to 69.0 mol.%, greater than or equal to 69.0 mol.% and less than or equal to 84.0 mol.%, greater than or equal to 69.0 mol.% and less than or equal to 70.0 mol.%.

The glass composition may include boron oxide ($B_2O_3$). Like $SiO_2$, $Al_2O_3$, and $P_2O_5$, $B_2O_3$ may be added to the glass composition as a network former. However, it has been found that additions of boron significantly reduce diffusivity of alkali ions in the glass, which, in turn, adversely impacts the ion exchange performance of the resultant glass. The addition of $B_2O_3$ in some amounts may help to decrease the viscosity of a glass-forming melt, therefore decreasing the temperature required for melting and forming. However, if too much $B_2O_3$ is added, volatility may occur at the surface of a glass melt, resulting in compositional inhomogeneity or localized reductions in the viscosity at the liquidus temperature for areas of the glass melt. Further, the addition of too much $B_2O_3$ may adversely affect the annealing point of the glass composition. Accordingly, the content of boron oxide is preferably limited, or glass compositions may be substantially free of $B_2O_3$. In embodiments, the glass composition may contain boron oxide ($B_2O_3$) in an amount from greater than or equal to 0.0 mol.% to less than or equal to 10.0 mol.% and all ranges and sub-ranges between the foregoing values. In some embodiments, the glass composition may contain $B_2O_3$ in an amount greater than or equal to 0.0 mol.%, greater than or equal to 5.0 mol.%, greater than or equal to 7.0 mol.%, greater than or equal to 8.0 mol.%, or greater than or equal to 9.0 mol.%. In some other embodiments, the glass composition may contain $B_2O_3$ in an amount less than or equal to 10.0 mol.%, less than or equal to 9.0 mol.%, less than or equal to 8.0 mol.%, less than or equal to 7.0 mol.%, less than or equal to 5.0 mol.%, less than or equal to 3.8 mol.%, less than or equal to 3.0 mol.%, less than or equal to 0.8 mol.%, or less than or equal to 0.7 mol.%. In some more embodiments, the glass composition may contain $B_2O_3$ in an amount greater than or equal to 0.0 mol.% and less than or equal to 3.8 mol.%, greater than or equal to 0.0 mol.% and less than or equal to 3.0 mol.%, greater than or equal to 0.0 mol.% and less than or equal to 0.8 mol.%, greater than or equal to 0.0 mol.% and less than or equal to 0.7 mol.%, greater than or equal to 0.0 mol.% and less than or equal to 10.0 mol.%, greater than or equal to 5.0 mol.% and less than or equal to 7.0 mol.%, greater than or equal to 7.0 mol.% and less than or equal to 10.0 mol.%, greater than or equal to 8.0 mol.% and less than or equal to 10.0 mol.%, greater than or equal to 8.0 mol.% and less than or equal to 9.0 mol.%.

The glass composition may include phosphorus oxide ($P_2O_5$). Like $SiO_2$ and $Al_2O_3$, $P_2O_5$ may be added to the glass composition as a network former, thereby reducing the meltability and formability of the glass composition. In some amounts, $P_2O_5$ can be added to the glass composition to increase the viscosity at the liquidus temperature, therefore limiting the propensity to crystallize during the cooling of the glass-forming melt. The addition of $P_2O_5$ may also increase the diffusivity of ions in the glass composition during ion-exchange treatments, thereby increasing the efficiency of such treatments. However, if too much $P_2O_5$ is added, the annealing point of the glass may be reduced, the CTE may be increased, or phase separation may be induced upon cooling of the glass-forming melt. Accordingly, the content of phosphorus oxide is preferably limited, or glass compositions may be substantially free of $P_2O_5$. In embodiments, the glass composition may contain phosphorus oxide ($P_2O_5$) in an amount from greater than or equal to 0.0 mol.% to less than or equal to 10.0 mol.% and all ranges and sub-ranges between the foregoing values. In some embodiments, the glass composition may contain $P_2O_5$ in an amount greater than or equal to 0.0 mol.%, greater than or equal to 1.1 mol.%, greater than or equal to 2.5 mol.%, greater than or equal to 5.0 mol.%, greater than or equal to 7.0 mol.%, greater than or equal to 8.0 mol.%, or greater than or equal to 9.0 mol.%. In some other embodiments, the glass composition may contain $P_2O_5$ in an amount less than or equal to 10.0 mol.%, less than or equal to 9.0 mol.%, less than or equal to 8.0 mol.%, less than or equal to 7.0 mol.%, less than or equal to 5.0 mol.%, less than or equal to 4.0 mol.%, less than or equal to 3.4 mol.%, or less than or equal to 3.0 mol.%. In some more embodiments, the glass composition may contain $P_2O_5$ in an amount greater than or equal to 0.0 mol.% and less than or equal to 4.0 mol.%, greater than or equal to 0.0 mol.% and less than or equal to 3.4 mol.%, greater than or equal to 0.0 mol.% and less than or equal to 3.0 mol.%, greater than or equal to 1.1 mol.% and less than or equal to 2.99 mol.%, greater than or equal to 0.0 mol.% and less than or equal to 10.0 mol.%, greater than or equal to 1.1 mol.% and less than or equal to 3.0 mol.%, greater than or equal to 5.0 mol.% and less than or equal to 7.0 mol.%.

The glass composition may have limitations for the amount of rare earth metal oxides. Rare earth metal oxides, especially yttrium oxide ($Y_2O_3$), can be added to the glass composition to increase the specific modulus, annealing and strain points, at the same time decreasing the high-temperature viscosity and, thus, allowing for melting of the glass at a lower temperature more compatible with the conventional refractories. However, when the content of $RE_mO_n$ is high, it may adversely increase the liquidus temperature because of crystallization of refractory minerals, such as rare earth metal aluminates ($RE_3Al_5O_{12}$), silicates ($RE_2SiO_5$, $RE_2Si_2O_7$) and others, which may, in turn, decrease the liquidus viscosity. Accordingly, the content of rare earth metal oxides is preferably limited, or glass compositions may be substantially free of $RE_mO_n$.

In some other embodiments, the glass composition may contain rare earth metal oxides $RE_mO_n$ in an amount less than or equal to 3.0 mol.%, or less than or equal to 2.5 mol.%. In some more embodiments, the glass composition may contain $RE_mO_n$ in an amount greater than or equal to 0.0 mol.% and less than or equal to 3.0 mol.%, or greater than or equal to 0.0 mol.% and less than or equal to 2.5 mol.%.

The glass composition may include lanthanum oxide ($La_2O_3$). Lanthanum oxide can be added to the glass compositions to increase the annealing and strain points, while at the same time decreasing the melting temperature. However, adding lanthanum oxide may decrease the liquidus viscosity and specific modulus of the glass. Accordingly, the content of lanthanum oxide is preferably limited, or glass compositions may be substantially free of $La_2O_3$. In embodiments, the glass composition may contain lanthanum oxide ($La_2O_3$) in an amount from greater than or equal to 0.0 mol.% to less than or equal to 3.0 -S.4 mol.% and all ranges and sub-ranges between the foregoing values. In some other embodiments, the glass composition may contain $La_2O_3$ in an amount less than or equal to 2.5 mol.%, or less than or equal to 0.7 mol.%. In some more embodiments, the glass composition may contain $La_2O_3$ in an amount greater than or equal to 0.0 mol.% and less than or equal to 0.7 mol.%, greater than or equal to 0.0 mol.% and less than or equal to 3.0 mol.%.

Glass composition may include alkali metal oxides ($Alk_2O$). Alkali metal oxides can be added to the glass compositions to decrease the liquidus temperature and high-temperature viscosity, maintaining high liquidus viscosity. Also, adding $Alk_2O$ can increase the solubility of high-modulus species, such as, for example, $TiO_2$, $ZrO_2$, $Y_2O_3$ and others, thus indirectly increasing the specific modulus. Also, in presence of boron oxide ($B_2O_3$), alkali metal oxides may transform the boron atoms from trigonal to tetrahedral form, which may also indirectly increase the specific modulus of glass.

In embodiments, the glass composition may contain alkali metal oxides ($Alk_2O$) in an amount from greater than or equal to 0.0 mol.% to less than or equal to 12.0 mol.% and all ranges and sub-ranges between the foregoing values. In some embodiments, the glass composition may contain alkali metal oxides $Alk_2O$ in an amount greater than or equal to 0.0 mol.%, greater than or equal to 0.5 mol.%, or greater than or equal to 2.5 mol.%. In some other embodiments, the glass composition may contain $Alk_2O$ in an amount less than or equal to 12.0 mol.%, less than or equal to 10.0 mol.%, less than or equal to 9.0 mol.%, less than or equal to 8.0 mol.%, less than or equal to 6.0 mol.%. In some more embodiments, the glass composition may contain $Alk_2O$ in an amount greater than or equal to 0.0 mol.% and less than or equal to 12.0 mol.%, greater than or equal to 0.0 mol.% and less than or equal to 10.0 mol.%, greater than or equal to 0.0 mol.% and less than or equal to 8.0 mol.%, greater than or equal to 1.0 mol.% and less than or equal to 8.0 mol.%, greater than or equal to 2.0 mol.% and less than or equal to 7.0 mol.%.

The glass composition may include lithium oxide ($Li_2O$). $Li_2O$ lowers the viscosity of a glass, which enhances the melting behavior, formability, and the Young's modulus, and may enable ion exchangeability. However, when too much $Li_2O$ is added, the CTE of the glass increases and the strain point decreases. Further, if the amount of $Li_2O$ is too high, $Li_2O$ may cause crystallization of undesired species such as spodumene ($LiAl(SiO_3)_2$) which may reduce the viscosity at the liquidus temperature and, therefore, increase the critical cooling rate, which may cause crystallization of the glass-forming melt when cooling. Accordingly, the content of lithium oxide is preferably limited, or glass compositions may be substantially free of $Li_2O$. In embodiments, the glass composition may contain lithium oxide ($Li_2O$) in an amount from greater than or equal to 0.5 mol.% to less than or equal to 7.5 mol.% and all ranges and sub-ranges between the foregoing values. In some embodiments, the glass composition may contain $Li_2O$ in an amount greater than or equal to 2.8 mol.%, greater than or equal to 3.0 mol.%, greater than or equal to 3.2 mol.%, greater than or equal to 5.0 mol.%, greater than or equal to 7.0 mol%. In some other embodiments, the glass composition may contain $Li_2O$ in an amount less than or equal to 7.4 mol.%, less than or equal to 7.0 mol.%, less than or equal to 6.2 mol.%, less than or equal to 6.0 mol.%, or less than or equal to 5.0 mol.%. In some more embodiments, the glass composition may contain $LijO$ in an amount greater than or equal to 2.8 mol.% and less than or equal to 7.0 mol.%, greater than or equal to 3.0 mol.% and less than or equal to 6.32 mol.%, greater than or equal to 3.2 mol.% and less than or equal to 6.2 mol.%, greater than or equal to 0.0 mol.% and less than or equal to 5.0 mol.%, greater than or equal to 0.3 mol.% and less than or equal to 5.0 mol.%, greater than or equal to 0.5 mol.% and less than or equal to 5.0 mol.%, greater than or equal to 3.0 mol.% and less than or equal to 10.0 mol.%, greater than or equal to 3.0 mol.% and less than or equal to 5.0 mol.%, greater than or equal to 3.2 mol.% and less than or equal to 5.0 mol.%, greater than or equal to 5.0 mol.% and less than or equal to 6.0 mol.%.

The glass composition may include sodium oxide ($Na_2O$). $Na_2O$ lowers the viscosity of a glass, which enhances the melting behavior, formability, and may enable ion exchangeability. However, when too much $Na_2O$ is added, the CTE of the glass composition increases, the Young's modulus decreases, and the strain point decreases. Accordingly, the content of sodium oxide is preferably limited, or glass compositions may be substantially free of $Na_2O$. In embodiments, the glass composition may contain sodium oxide ($Na_2O$) in an amount from greater than or equal to 0.0 mol.% to less than or equal to 10.0 mol.% and all ranges and sub-ranges between the foregoing values. In some embodiments, the glass composition may contain $Na_2O$ in an amount greater than or equal to 0.0 mol.%, greater than or equal to 0.4 mol.%, greater than or equal to 0.9 mol.%, greater than or equal to 1.0 mol.%, greater than or equal to 5.0 mol.%, greater than or equal to 7.0 mol.%, greater than or equal to 8.0 mol.%, or greater than or equal to 9.0 mol.%. In some other embodiments, the glass composition may contain $Na_2O$ in an amount less than or equal to 10.0 mol.%, less than or equal to 9.0 mol.%, less than or equal to 8.0 mol.%, less than or equal to 7.0 mol.%, less than or equal to 5.0 mol.%, less than or equal to 4.8 mol.%, less than or equal to 4.4 mol.%, or less than or equal to 4.0 mol.%. In some more embodiments, the glass composition may contain $Na_2O$ in an amount greater than or equal to 0.0 mol.% and less than or equal to 5.0 mol.%, greater than or equal to 0.0 mol.% and less than or equal to 4.8 mol.%, greater than or equal to 0.4 mol.% and less than or equal to 4.4 mol.%, greater than or equal to 0.9 mol.% and less than or equal to 4.0 mol.%, greater than or equal to 1.0 mol.% and less than or equal to 3.98 mol.%, greater than or equal to 0.0 mol.% and less than or equal to 10.0 mol.%, greater than or equal to 0.0 mol.% and less than or equal to 4.0 mol.%, greater than or equal to 0.4 mol.% and less than or equal to 4.0 mol.%, greater than or equal to 0.9 mol.% and less than or equal to 10.0 mol.%, greater than or equal to 1.0 mol.% and less than or equal to 4.0 mol.%, greater than or equal to 5.0 mol.% and less than or equal to 10.0 mol.%, greater than or equal to 5.0 mol.% and less than or equal to 7.0 mol.%.

The glass composition may include zinc oxide (ZnO). Zinc oxide can be added to the glass composition to increase the specific modulus, similar to MgO. However, when the content of ZnO is high, it may cause crystallization of refractory minerals, such as, for example, gahnite ($ZnAl_2O_4$), or liquid-liquid phase separation of the glass forming melt. Accordingly, the content of zinc oxide is preferably limited, or glass compositions may be substantially free of ZnO. In embodiments, the glass composition may contain zinc oxide (ZnO) in an amount from greater than or equal to 0.0 mol.% to less than or equal to 5.0 mol.% and all ranges and sub-ranges between the foregoing values. In some other embodiments, the glass composition may contain ZnO in an amount less than or equal to 5.0 mol.%, less than or equal to 3.0 mol.%, less than or equal to 2.5 mol.%, or less than or equal to 2.0 mol.%. In some more embodiments, the glass composition may contain ZnO in an amount greater than or equal to 0.0 mol.% and less than or equal to 3.0 mol.%, greater than or equal to 0.0 mol.% and less than or equal to 2.0 mol.%, greater than or equal to 0.0 mol.% and less than or equal to 5.0 mol.%.

The glass composition may include zirconia ($ZrO_2$). Zirconia can be added to the glass compositions to increase the specific modulus. However, addition of even small amounts of zirconia to alumina-rich compositions may cause crystallization of refractory minerals, such as zircon ($ZrSiO_4$) or zirconia ($ZrO_2$), which may increase the liquidus temperature and decrease the liquidus viscosity. Accordingly, the content of zirconia is preferably limited, or glass compositions may be substantially free of $ZrO_2$. In embodiments, the glass composition may contain zirconia ($ZrO_2$) in an amount from greater than or equal to 0.0 mol.% to less than or equal to 0.5 mol.% and all ranges and sub-ranges between the foregoing values.

The glass composition may include barium oxide (BaO). The addition of BaO increases the viscosity at the liquidus temperature, therefore limiting the propensity to crystallize during the cooling of the glass-forming melt. However, when too much BaO is added, the density and the CTE of the glass increases. Accordingly, the content of barium oxide is preferably limited, or glass compositions may be substantially free of BaO. In embodiments, the glass composition may contain barium oxide (BaO) in an amount from greater than or equal to 0.0 mol.% to less than or equal to 10.0 mol.% and all ranges and sub-ranges between the foregoing values. In some embodiments, the glass composition may contain BaO in an amount greater than or equal to 0.0 mol.%, or greater than or equal to 5.0 mol.%. In some other embodiments, the glass composition may contain BaO in an amount less than or equal to 10.0 mol.%, less than or equal to 5.0 mol.%, less than or equal to 3.0 mol.%, less than or equal to 1.0 mol.%, less than or equal to 0.7 mol.%, or less than or equal to 0.625 mol.%. In some more embodiments, the glass composition may contain BaO in an amount greater than or equal to 0.0 mol.% and less than or equal to 3.0 mol.%, greater than or equal to 0.0 mol.% and less than or equal to 1.0 mol.%, greater than or equal to 0.0 mol.% and less than or equal to 0.7 mol.%, greater than or equal to 0.0 mol.% and less than or equal to 0.625 mol.%, greater than or equal to 0.0 mol.% and less than or equal to 10.0 mol.%.

The glass composition may include strontium oxide (SrO). SrO lowers the viscosity of a glass, which enhances the melting behavior, formability, and the strain point of the glass composition. In some embodiments, the addition of SrO increases the viscosity at the liquidus temperature, therefore limiting the propensity to crystallize during the cooling of the glass-forming melt. However, when too much SrO is added, the density and the CTE of the glass increase. Accordingly, the content of strontium oxide is preferably limited, or glass compositions may be substantially free of SrO. In embodiments, the glass composition may contain strontium oxide (SrO) in an amount from greater than or equal to 0.0 mol.% to less than or equal to 10.0 mol.% and all ranges and sub-ranges between the foregoing values. In some embodiments, the glass composition may contain SrO in an amount greater than or equal to 0.0 mol.%, greater than or equal to 0.49 mol.%, greater than or equal to 5.0 mol.%, greater than or equal to 7.0 mol.%, greater than or equal to 8.0 mol.%, or greater than or equal to 9.0 mol.%. In some other embodiments, the glass composition may contain SrO in an amount less than or equal to 10.0 mol.%, less than or equal to 9.0 mol.%, less than or equal to 8.0 mol.%, less than or equal to 7.0 mol.%, less than or equal to 5.0 mol.%, less than or equal to 1.5 mol.%, less than or equal to 1.19 mol.%, less than or equal to 1.1 mol.%, or less than or equal to 0.95 mol.%. In some more embodiments, the glass composition may contain SrO in an amount greater than or equal to 0.0 mol.% and less than or equal to 1.5 mol.%, greater than or equal to 0.0 mol.% and less than or equal to 1.1 mol.%, greater than or equal to 0.0 mol.% and less than or equal to 0.95 mol.%, greater than or equal to 0.49 mol.% and less than or equal to 1.19 mol.%, greater than or equal to 0.0 mol.% and less than or equal to 10.0 mol.%, greater than or equal to 0.49 mol.% and less than or equal to 0.95 mol.%, greater than or equal to 5.0 mol.% and less than or equal to 7.0 mol.%, greater than or equal to 8.0 mol.% and less than or equal to 9.0 mol.%.

The glass composition may include magnesia (MgO). MgO lowers the viscosity of a glass, which enhances the melting behavior, formability, the strain point, and the Young's modulus, and may improve ion exchangeability. However, when too much MgO is added, the density and the CTE of the glass increases. Further, if the amount of MgO is too high, MgO may cause crystallization of refractory species such as cordierite ($Mg_2Al_4Si_5O_{18}$) which may reduce the viscosity at the liquidus temperature and, therefore, increase the critical cooling rate, which may cause crystallization of the glass-forming melt when cooling. Accordingly, the content of magnesia is preferably limited, or glass compositions may be substantially free of MgO. In embodiments, the glass composition may contain magnesia (MgO) in an amount from greater than or equal to 0.0 mol.% to less than or equal to 10.0 mol.% and all ranges and sub-ranges between the foregoing values. In some embodiments, the glass composition may contain MgO in an amount greater than or equal to 0.0 mol.%, greater than or equal to 0.4 mol.%, greater than or equal to 1.0 mol.%, greater than or equal to 2.0 mol.%, greater than or equal to 5.0 mol.%, greater than or equal to 7.0 mol.%, greater than or equal to 8.0 mol.%, or greater than or equal to 9.0 mol.%. In some other embodiments, the glass composition may contain MgO in an amount less than or equal to 10.0 mol.%, less than or equal to 9.0 mol.%, less than or equal to 8.0 mol.%, less than or equal to 7.0 mol.%, less than or equal to 6.0 mol.%, less than or equal to 5.0 mol.%, less than or equal to 4.4 mol.%, less than or equal to 4.3 mol.%, or less than or equal to 4.0 mol.%. In some more embodiments, the glass composition may contain MgO in an amount greater than or equal to 0.0 mol.% and less than or equal to 6.0 mol.%, greater than or equal to 0.0 mol.% and less than or equal to 5.0 mol.%, greater than or equal to 0.0 mol.% and less than or equal to 4.3 mol.%, greater than or equal to 0.4 mol.% and less than or equal to 4.4 mol.%, greater than or equal to 1.0 mol.% and less than or equal to 4.0 mol.%, greater than or equal to 1.99 mol.% and less than or equal to 4.31 mol.%, greater than or equal to 0.0 mol.% and less than or equal to 10.0 mol.%, greater than or equal to 0.0 mol.% and less than or equal to 4.0 mol.%, greater than or equal to 0.4 mol.% and less than or equal to 4.0 mol.%, greater than or equal to 5.0 mol.% and less than or equal to 6.0 mol.%.

The glass composition may include calcium oxide (CaO). CaO lowers the viscosity of a glass, which enhances the melting behavior, formability, the strain point, and the Young's modulus, and may improve ion exchangeability. However, when too much CaO is added, the density and the CTE of the glass increases. Further, if the amount of CaO is too high, CaO may cause crystallization of undesired species such as anorthite ($CaAl_2Si_2O_8$) which may reduce the viscosity at the liquidus temperature and, therefore, increase the critical cooling rate, which may cause crystallization of the glass-forming melt when cooling. Accordingly, the content of calcium oxide is preferably limited, or glass compositions may be substantially free of CaO. In embodiments, the glass composition may contain calcium oxide (CaO) in an amount from greater than or equal to 0.0 mol.% to less than or equal to 10.0 mol.% and all ranges and sub-ranges between the foregoing values. In some embodiments, the glass composition may contain CaO in an amount greater than or equal to 0.0 mol.%, greater than or equal to 0.3 mol.%, greater than or equal to 1.0 mol.%, greater than or equal to 1.4 mol.%, greater than or equal to 1.9 mol.%, greater than or equal to 3.0 mol.%, greater than or equal to 5.0 mol.%, greater than or equal to 7.0 mol.%, greater than or equal to 8.0 mol.%, or greater than or equal to 9.0 mol.%. In some other embodiments, the glass composition may contain CaO in an amount less than or equal to 10.0 mol.%, less than or equal to 9.0 mol.%, less than or equal to 8.0 mol.%, less than or equal to 7.5 mol.%, less than or equal to 7.0 mol.%, less than or equal to 6.0 mol.%, less than or equal to 5.6 mol.%, or less than or equal to 5.0 mol.%. In some more embodiments, the glass composition may contain CaO in an amount greater than or equal to 0.0 mol.% and less than or equal to 10.0 mol.%, greater than or equal to 0.3 mol.% and less than or equal to 7.5 mol.%, greater than or equal to 1.0 mol.% and less than or equal to 6.0 mol.%, greater than or equal to 1.4 mol.% and less than or equal to 5.6 mol.%, greater than or equal to 1.9 mol.% and less than or equal to 5.0 mol.%, greater than or equal to 2.5 mol.% and less than or equal to 5.17 mol.%, greater than or equal to 0.0 mol.% and less than or equal to 5.0 mol.%, greater than or equal to 0.3 mol.% and less than or equal to 5.0 mol.%, greater than or equal to 1.0 mol.% and less than or equal to 5.0 mol.%, greater than or equal to 1.4 mol.% and less than or equal to 5.0 mol.%, greater than or equal to 1.9 mol.% and less than or equal to 10.0 mol.%, greater than or equal to 5.0 mol.% and less than or equal to 5.6 mol.%.

The glass composition may include alumina ($Al_2O_3$). $Al_2O_3$ may serve as a glass network former, similar to $SiO_2$. $Al_2O_3$ may increase the viscosity of the glass composition due to its tetrahedral coordination in a glass melt formed from a glass composition, decreasing the formability of the glass compositions when the amount of $Al_2O_3$ is too high. In some embodiments when the concentration of $Al_2O_3$ is balanced against the concentration of $SiO_2$ and the concentration of alkali oxides in the glass composition, $Al_2O_3$ can reduce the liquidus temperature of the glass melt, thereby reducing the glass liquidus viscosity and improving the compatibility with certain forming process. However if the amount of $Al_2O_3$ is too high, particularly in excess of the total modifier content (alkali oxides and alkaline earth oxides), $Al_2O_3$ may cause crystallization of refractory species such as corundum ($Al_2O_3$) or aluminosilicates like mullite ($3Al_2O_3 \cdot 2SiO_2$) which may reduce the viscosity at the liquidus temperature and, therefore, increase the critical cooling rate, which may cause crystallization of the glass-forming melt when cooling. Accordingly, the content of alumina is preferably limited. In embodiments, the glass composition may contain alumina ($Al_2O_3$) in an amount from greater than or equal to 10.0 mol.% to less than or equal to 18.0 +9-0 mol.% and all ranges and sub-ranges between the foregoing values. In some embodiments, the glass composition may contain $Al_2O_3$ in an amount greater than or equal to 10.0 mol.%, greater than or equal to 10.5 mol.%, greater than or equal to 11.0 mol.%, greater than or equal to 12.0 mol.%, greater than or equal to 12.34 mol.%, greater than or equal to 15.0 mol.%, greater than or equal to 16.0 mol.%, or greater than or equal to 17.0 mol%. In some other embodiments, the glass composition may contain $Al_2O_3$ in an amount less than or equal to 17.0 mol.%, less than or equal to 16.0 mol.%, less than or equal to 15.0 mol.%, or less than or equal to 11.0 mol.%. In some more embodiments, the glass composition may contain $Al_2O_3$ in an amount greater than or equal to 10.0 mol.% and less than or equal to 17.0 mol.%, greater than or equal to 10.5 mol.% and less than or equal to 18.0 mol.%, greater than or equal to 11.0 mol.% and less than or equal to 18.0 mol.%, greater than or equal to 12.0 mol.% and less than or equal to 18.0 mol.%, greater than or equal to 12.34 mol.% and less than or equal to 18.0 mol.%, greater than or equal to 10.0 mol.% and less than or equal to 11.0 mol.%, greater than or equal to 10.5 mol.% and less than or equal to 20.0 mol.%, greater than or equal to 10.5 mol.% and less than or equal to 11.0 mol.%, greater than or equal to 11.0 mol.% and less than or equal to 20.0 mol.%, greater than or equal to 11.0 mol.% and less than or equal to 15.0 mol.%, greater than or equal to 12.0 mol.% and less than or equal to 20.0 mol.%, greater than or equal to 12.0 mol.% and less than or equal to 15.0 mol.%.

Glass composition may include fluorine (F). Fluorine can be added in a small amount to the glass compositions of the present disclosure as a fining agent. However, fluorine may cause environmental concern. Accordingly, the content of fluorine is preferably limited, or glass compositions may be substantially free of fluorine. In embodiments, the glass composition may contain fluorine (F) in an amount from greater than or equal to 0.0 at.% to less than or equal to 0.5 at.% and all ranges and sub-ranges between the foregoing values. In some other embodiments, the glass composition may contain F in an amount less than or equal to 0.05 at.%.

In some embodiments, the glass composition may have a sum of CaO+MgO greater than or equal to 0.0 mol.%, or greater than or equal to 5.0 mol.%. In some other embodiments, the glass composition may have a sum of CaO+MgO less than or equal to 9.0 mol.% or less than or equal to 5.0 mol.%. In some more embodiments, the glass composition may have a sum of CaO+MgO greater than or equal to 0.0 mol.% and less than or equal to 9.0 mol.%, or greater than or equal to 0.0 mol.% and less than or equal to 5.0 mol.%.

In some embodiments, the glass composition may have a sum of CaO+SrO greater than or equal to 0.0 mol.%, greater than or equal to 2.0 mol.%, or greater than or equal to 5.0 mol.%. In some other embodiments, the glass composition may have a sum of CaO+SrO less than or equal to 9.0 mol.% or less than or equal to 5.0 mol.%. In some more embodiments, the glass composition may have a sum of CaO+SrO greater than or equal to 0.0 mol.% and less than or equal to 9.0 mol.%, or greater than or equal to 0.0 mol.% and less than or equal to 5.0 mol.%, greater than or equal to 2.0 mol.% and less than or equal to 9.0 mol.%, or greater than or equal to 2.0 mol.% and less than or equal to 5.0 mol.%.

In some embodiments, the glass composition may have a sum of $Li_2O+MgO$ greater than or equal to 0.0 mol.%, or greater than or equal to 5.0 mol.%. In some other embodiments, the glass composition may have a sum of $Li_2O+MgO$ less than or equal to 10.0 mol.%, less than or equal to 8.0 mol.%, or less than or equal to 5.0 mol.%. In some more embodiments, the glass composition may have a sum of $Li_2O+MgO$ greater than or equal to 0.0 mol.% and less than or equal to 10.0 mol.%, greater than or equal to 0.0 mol.% and less than or equal to 8.0 mol.%, or greater than or equal to 0.0 mol.% and less than or equal to 5.0 mol.%, greater than or equal to 5.0 mol.% and less than or equal to 10.0 mol.%, or greater than or equal to 5.0 mol.% and less than or equal to 8.0 mol.%.

In some embodiments, the glass composition may have a sum of $Li_2O+Na_2O$ greater than or equal to 0.0 mol.%, greater than or equal to 0.5 mol.%, greater than or equal to 4.0 mol.%, or greater than or equal to 5.0 mol.%. In some other embodiments, the glass composition may have a sum of $Li_2O+Na_2O$ less than or equal to 9.0 mol.% or less than or equal to 5.0 mol.%. In some more embodiments, the glass composition may have a sum of $Li_2O+Na_2O$ greater than or equal to 0.0 mol.% and less than or equal to 9.0 mol.%, or greater than or equal to 0.0 mol.% and less than or equal to 5.0 mol.%, greater than or equal to 0.5 mol.% and less than or equal to 9.0 mol.%, or greater than or equal to 0.5 mol.% and less than or equal to 5.0 mol.%, greater than or equal to 4.0 mol.% and less than or equal to 9.0 mol.%.

In some embodiments, the glass composition may have a sum of MgO+CaO+SrO+BaO+ZnO greater than or equal to 0.0 mol.%, greater than or equal to 0.5 mol.%, or greater than or equal to 1.0 mol.%.

In some embodiments, the glass composition may have a sum of MgO+ZnO greater than or equal to 0.0 mol.%, greater than or equal to 1.0 mol.%, or greater than or equal to 5.0 mol.%. In some other embodiments, the glass composition may have a sum of MgO+ZnO less than or equal to 10.0 mol.%, less than or equal to 5.0 mol.%, or less than or equal to 4.0 mol.%. In some more embodiments, the glass composition may have a sum of MgO+ZnO greater than or equal to 0.0 mol.% and less than or equal to 10.0 mol.%, greater than or equal to 0.0 mol.% and less than or equal to 5.0 mol.%, or greater than or equal to 0.0 mol.% and less than or equal to 4.0 mol.%, greater than or equal to 1.0 mol.% and less than or equal to 10.0 mol.%, greater than or equal to 1.0 mol.% and less than or equal to 5.0 mol.%, or greater than or equal to 1.0 mol.% and less than or equal to 4.0 mol.%.

In some other embodiments, the glass composition may have a sum of $ZrO_2+TiO_2+FeO+Fe_2O_3$ less than or equal to 1.5 mol.%, less than or equal to 1.0 mol.%, or less than or equal to 0.021 mol.%. In some more embodiments, the glass composition may have a sum of $ZrO_2+TiO_2+FeO+Fe_2O_3$ greater than or equal to 0.0 mol.% and less than or equal to 1.5 mol.%, greater than or equal to 0.0 mol.% and less than or equal to 1.0 mol.%, or greater than or equal to 0.0 mol.% and less than or equal to 0.021 mol.%.

In some embodiments, the glass composition may have limitations for $min(RE_mO_n,P_2O_5)$. It was empirically found that in alumina-rich glasses, especially when the content of alumina exceeds the total content of alkali metal oxides, adding even small amounts of rare earth metal oxides ($RE_mO_n$), especially yttrium oxide ($Y_2O_3$), together with $P_2O_5$ may cause crystallization of rare earth metal phosphates, such as yttrium phosphate ($YPO_4$), at high temperatures,

which may raise the liquidus temperature and decrease the liquidus viscosity of glass. Accordingly, in some embodiments, it is preferable that the glass composition either contains only one of $P_2O_5$ or $RE_mO_n$, or is substantially free of both $P_2O_5$ and $RE_mO_n$. In some embodiments, the glass may have a value of $min(RE_mO_n, P_2O_5)$ greater than or equal to 0.00 mol.%, greater than or equal to 0.10 mol.%, or greater than or equal to 0.20 mol.%. In some other embodiments, the glass may have a value of $min(RE_mO_n, P_2O_5)$ less than or equal to 0.30 mol.%, less than or equal to 0.20 mol.%, less than or equal to 0.15 mol.%, or less than or equal to 0.10 mol.%. The glass has a $min(RE_mO_n, P_2O_5)$ greater than or equal to 0.00 mol.% and less than or equal to 0.30 mol.%, greater than or equal to 0.00 mol.% and less than or equal to 0.20 mol.%, greater than or equal to 0.00 mol.% and less than or equal to 0.15 mol.%, or greater than or equal to 0.00 mol.% and less than or equal to 0.10 mol.%, greater than or equal to 0.10 mol.% and less than or equal to 0.30 mol.%, greater than or equal to 0.10 mol.% and less than or equal to 0.20 mol.%, or greater than or equal to 0.10 mol.% and less than or equal to 0.15 mol.%.

In some embodiments, the glass may have the specific modulus $E/d_{RT}$ from greater than or equal to 32.0 GPa·cm³/g to less than or equal to 35.1 GPa·cm³/g and all ranges and sub-ranges between the foregoing values. In some embodiments, the glass may have the $E/d_{RT}$ greater than or equal to 32.0 GPa·cm³/g, greater than or equal to 32.5 GPa·cm³/g, greater than or equal to 33.0 GPa·cm³/g, greater than or equal to 33.9 GPa·cm³/g, greater than or equal to 34.0 GPa·cm³/g, greater than or equal to 34.5 GPa·cm³/g, greater than or equal to 34.7 GPa·cm³/g, greater than or equal to 34.9 GPa·cm³/g, or greater than or equal to 35.0 GPa·cm³/g. In some other embodiments, the glass may have the $E/d_{RT}$ less than or equal to 35.1 GPa·cm³/g, less than or equal to 35.0 GPa·cm³/g, less than or equal to 34.9 GPa·cm³/g, less than or equal to 34.7 GPa·cm³/g, less than or equal to 34.5 GPa·cm³/g, less than or equal to 34.0 GPa·cm³/g, less than or equal to 33.0 GPa·cm³/g, or less than or equal to 32.5 GPa·cm³/g. In some more embodiments, the glass may have the $E/d_{RT}$ greater than or equal to 32.0 GPa·cm³/g and less than or equal to 35.1 GPa·cm³/g, greater than or equal to 32.5 GPa·cm³/g and less than or equal to 35.1 GPa·cm³/g, greater than or equal to 33.0 GPa·cm³/g and less than or equal to 34.0 GPa·cm³/g.

In some embodiments, the glass may have an annealing point (An.P.) from greater than or equal to 650 °C to less than or equal to 800 °C and all ranges and sub-ranges between the foregoing values. In some embodiments, the glass may have an An.P. greater than or equal to 650 °C, greater than or equal to 680 °C, greater than or equal to 700 °C, greater than or equal to 703 °C, greater than or equal to 730 °C, greater than or equal to 740 °C, greater than or equal to 750 °C, greater than or equal to 760 °C, or greater than or equal to 780 °C. In some other embodiments, the glass may have an An.P. less than or equal to 800 °C, less than or equal to 780 °C, less than or equal to 760 °C, less than or equal to 750 °C, less than or equal to 740 °C, less than or equal to 729 °C, or less than or equal to 700 °C. In some more embodiments, the glass may have an An.P. greater than or equal to 650 °C and less than or equal to 800 °C, greater than or equal to 650 °C and less than or equal to 700 °C, greater than or equal to 700 °C and less than or equal to 729 °C, greater than or equal to 703 °C and less than or equal to 729 °C, greater than or equal to 740 °C and less than or equal to 800 °C.

In some embodiments, the glass may have a temperature corresponding to a viscosity of 160,000 Poise ($T_{160kP}$) from greater than or equal to 1200 °C to less than or equal to 1300 °C and all ranges and sub-ranges between the foregoing values. In some embodiments, the glass may have the $T_{160kP}$ greater than or equal to 1240 °C, greater than or equal to 1250 °C, greater than or equal to 1260 °C, or greater than or equal to 1280 °C. In some other embodiments, the glass may have the $T_{160kP}$ less than or equal to 1300 °C, less than or equal to 1280 °C, less than or equal to 1260 °C, less than or equal to 1250 °C, less than or equal to 1240 °C, or less than or equal to 1209 °C. In some more embodiments, the glass may have the $T_{160kP}$ greater than or equal to 1250 °C and less than or equal to 1300 °C.

In some embodiments, the glass may have a logarithm of liquidus viscosity ($log(\eta_{liq})$), where liquidus viscosity $\eta_{liq}$ is expressed in units of Poise, greater than or equal to 5. or greater than or equal to 5.2.

In some embodiments, the glass may have an average linear thermal expansion coefficient of glass in the range 20-300°C $\alpha_{20-300} \times 10^7$ less than or equal to 40 K$^{-1}$.

In some embodiments, the glass may have a temperature corresponding to a viscosity of 200 Poise ($T_{200P}$) less than or equal to 1750 °C. In some other embodiments, the glass may have a $T_{200P}$ less than or equal to 1700 °C or less than or equal to 1650 °C and less than or equal to 1600 °C.

In some embodiments, the glass may have an aluminum-binding parameter $P_{Al}$ greater than or equal to -2.8.

In some embodiments, the glass may have a modifier-binding parameter $P_{mod}$ greater than or equal to -3, greater than or equal to -0.2, greater than or equal to 0.8, greater than or equal to 1.8, or greater than or equal to 2. In some other embodiments, the glass may have a modifier-binding parameter $P_{mod}$ less than or equal to 2.8 or less than or equal to 2. In some more embodiments, the glass may have a $P_{mod}$ greater than or equal to -3 and less than or equal to 2.8, or greater than or equal to -3 and less than or equal to 2, greater than or equal to -0.2 and less than or equal to 2.8, or greater than or equal to -0.2 and less than or equal to 2, greater than or equal to 0.8 and less than or equal to 2.8, or greater than or equal to 0.8 and less than or equal to 2, greater than or equal to 1.8 and less than or equal to 2.8.

The glass has an anorthite precipitation parameter $P_{anort}$ less than or equal to 10.

The glass has a cristobalite precipitation parameter $P_{crist}$ less than or equal to 28.

The glass has a cordierite precipitation parameter $P_{cord}$ less than or equal to 5.

The glass has a spodumene precipitation parameter $P_{spod}$ less than or equal to 7.5.

In some embodiments, the glass may have a quantity $E/d_{RT} - (92.5 - 0.05 * T_{160kP})$ greater than or equal to 0.000.

Anorthite precipitation parameter $P_{anort}$ is a quantity calculated by the following formula (I):

$$P_{anort} = min(CaO+SrO+0.5*BaO+Na_2O+0.5*K_2O, Al_2O_3), \quad (I)$$

where chemical formulas mean the amounts of corresponding components in the glass composition in mol.%.

The anorthite precipitation parameter $P_{anort}$, as well as other precipitation parameters ($P_{cord}$, $P_{spod}$ and $P_{crist}$) described below, relate to empirically observed correlations between the glass composition and the liquidus temperature in cases when a specific crystalline phase (such as anorthite, cordierite, spodumene, cristobalite) was found to precipitate at the liquidus temperature. Without being bound to any specific theory, it is believed that these correlations are a consequence of chemical binding or association of specific oxides with each other in the glass forming melts, which, in turn, may form an atomic structure similar in structure to a crystalline phase with a tendency to precipitate from the melt.

Specifically, the anorthite precipitation parameter $P_{anort}$ accounts for oxides that form the mineral anorthite ($CaAl_2Si_2O_8$), including oxides that can be soluble in anorthite in the solid state, thus forming solid solutions, also known as plagioclases. It is known from the literature (see, for example: G.W.MOREY, Data of Geochemistry, 6th Edition, Chapter L: Phase Equilibrium Relations of the Common Rock-Forming Oxides Except Water, United States Government Printing Office, Washington, 1964, 173 pages) and has been empirically observed in certain glasses of the present disclosure, that anorthite or plagioclase crystalline precipitates can contain (besides CaO, $Al_2O_3$ and/or $SiO_2$), sodium oxide ($Na_2O$), potassium oxide $K_2O$, strontium oxide (SrO) and/or barium oxide (BaO), so that embodiments of potential crystalline precipitates related to anorthite can be represented by the chemical formulas $M_2O*Al_2O_3*3SiO_2$, where $M_2O$ refers to one or more of $Na_2O$ and $K_2O$, or $MO*Al_2O_3*2SiO_2$, where MO refers to one or more of CaO, SrO and BaO. It has also been empirically observed that the solubility of BaO and $K_2O$ in these crystalline precipitates is, in most cases, somewhat less than the solubility of CaO, SrO and $Na_2O$.

Without being bound to any specific theory, it is hypothesized that melts of some embodiments of the aluminosilicate glasses of the present disclosure may contain structural units with compositions similar to the compositions of anorthite and related crystalline precipitates. The greater the amount of such structural units in the melt is, the more likely it is that precipitation may occur, and, accordingly, the higher the temperature at which the corresponding crystalline precipitates may exist in equilibrium with the liquid phase.

Then, in embodiments of the present disclosure in which the content of $SiO_2$ in the glass composition is high enough to form anorthite or a related crystalline precipitate, it is hypothesized that the amount of such structural units ($M_2O*Al_2O_3*3SiO_2$ and $MO*Al_2O_3*2SiO_2$) that form in the melt of the glass composition can be roughly correlated with the lesser of the content of alumina ($Al_2O_3$) in mol.% and the total content of $M_2O+MO$ in mol.% in the glass composition, i.e. as $min(M_2O+MO, Al_2O_3)$, where chemical formulas and abbreviations mean the content of corresponding oxides in glass in terms of mol.%.

Regarding the limited solubility of $K_2O$ and BaO relative to CaO, SrO and $Na_2O$ in anorthite and related crystalline precipitates as noted above, an empirical factor of 0.5 was applied to the amounts of $K_2O$ and BaO when formulating the anorthite precipitation parameter $P_{anort}$. Accordingly, the sum ($M_2O+MO$), as stated above in the context of precipitation of anorthite and related crystalline phases, can be expressed as

$$M_2O+MO \approx (CaO+SrO+0.5*BaO+Na_2O+0.5*K_2O) \quad (II).$$

Finally, the lesser of the sum ($M_2O+MO$), as calculated by the formula (II), and $Al_2O_3$ gives an estimate of the amount of structural units that, when present in a glass forming melt, may precipitate as anorthite or a related crystalline phase (e.g. plagioclase).

Based on the above reasoning, it is hypothesized that a higher value of the parameter $P_{anort}$ may indicate a higher probability of precipitating anorthite or related crystalline phases (e.g. plagioclase) at high temperatures, thus causing higher liquidus temperature. This means that in some embodiments of the present disclosure, to reduce the liquidus temperature of glass, it is preferable that the value of $P_{anort}$ is small.

Cordierite precipitation parameter $P_{cord}$ is a quantity calculated by the following formula (III):

$$P_{cord} = MgO+MnO+FeO, \quad (III)$$

where chemical formulas mean the amounts of corresponding components in the glass composition in mol.%.

The cordierite precipitation parameter $P_{cord}$ is designed to predict the probability of precipitation of cordierite and related crystalline phases from the glass forming melts of the present disclosure at high temperatures.

The chemical formula of cordierite is commonly known as $2MgO*2Al_2O_3*5SiO_2$, or $Mg_2Al_4Si_5O_{18}$. However, it has been empirically observed that when precipitating from the glass forming melts, variations of cordierite in which MnO and/or FeO isostructurally replace MgO (in whole or in part) can form. Accordingly, assuming the amount of alumina and silica in the glass composition of the is sufficient to bind all MgO, MnO and FeO, the value of $P_{cord}$, as an estimate for predicting the tendency of precipitation of cordierite and related crystalline phases, can be presented as a sum of the concentrations of MgO, MnO, and FeO in the glass composition in mol.%, which gives the above-presented formula (III).

It is hypothesized that if the value of $P_{cord}$ is high, cordierite (or a related crystalline phase) may possibly precipitate from the glass forming melts at high temperatures. Accordingly, in some embodiments of the present disclosure, the value of $P_{cord}$ is preferably limited.

Spodumene precipitation parameter $P_{spod}$ is a quantity calculated by the following formula (IV):

$$P_{spod} = min(Li_2O, Al_2O_3 - K_2O - 0.5*Na_2O), \quad (IV)$$

where chemical formulas mean the amounts of corresponding components in mol.% in the glass composition.

The spodumene precipitation parameter $P_{spod}$ is designed to estimate the probability of precipitation of spodumene ($LiAlSi_2O_6$, or $Li_2O*Al_2O_3*4SiO_2$) from the glass forming melts at high temperatures.

Without being bound to a specific theory, it is hypothesized that the probability of precipitating spodumene from the glass forming melts at high temperatures may correlate to the amount of structural units with atomic compositions similar to that of spodumene. If the amount of silica in an embodiment of a glass composition of the present disclosure is sufficient for the formation of such structural units, the amount of such structural units in the melt can be roughly correlated to the lesser of the concentrations of $Li_2O$ and $Al_2O_3$, in mol.%, in the glass composition, mathematically expressed as

$$P_{spod} \approx min(Li_2O, Al_2O_3). \quad (V)$$

In addition, it has been empirically observed that if the glass composition contains significant amounts of $Na_2O$ and, especially, $K_2O$, precipitation of spodumene may be suppressed. Without being bound to a specific theory, it is hypothesized that this effect may be caused by chemical binding of the alumina in the glass forming melt with sodium and potassium oxides, thus making the bound alumina inactive in the reaction with $Li_2O$ and suppressing the precipitation of spodumene. To approximately account for this effect, the concentration of $K_2O$ and half of the concentration of $Na_2O$ are deducted from the concentration of $Al_2O_3$ when estimating the tendency of spodumene to precipitate from the melt. The term "$Al_2O_3$" in the formula (V) above is thus replaced by ($Al_2O_3 - K_2O - 0.5*Na_2O$), where the chemical formulas of oxides mean the concentrations of these oxides in the glass composition in mol.%. After this substitution, formula (V) is modified to give formula (IV) above for $P_{spod}$.

It is hypothesized that if the value of $P_{spod}$ is high, spodumene may possibly precipitate from the glass forming melts at high temperatures. Accordingly, in some embodiments of the present disclosure, the value of $P_{spod}$ is preferably limited.

Cristobalite precipitation parameter $P_{crist}$ is a quantity calculated by the following formula (VI):

$$P_{crist} = SiO_2 - 6*(Na_2O + K_2O) - 4*Li_2O - 2*(CaO + SrO + BaO) - 2.5*MgO, \quad (VI)$$

where chemical formulas mean the amounts of corresponding components in the glass composition in mol.%.

The cristobalite precipitation parameter $P_{crist}$ is introduced to estimate the probability of precipitation of the mineral cristobalite ($SiO_2$) from the glass forming melts of the present disclosure at high temperatures.

Without being bound to a specific theory, it is hypothesized that the amount of $SiO_2$ in the glass composition that may potentially precipitate in the form of cristobalite correlates to the residual amount of silica remaining after binding with other oxides (i.e. alumina, alkali metal oxides and alkaline earth metal oxides) in structural units with compositions of other crystalline phases having a tendency to precipitate. Such crystalline phases include $Li_2O*Al_2O_3*4SiO_2$ (spodumene), $Na_2O*Al_2O_3*6SiO_2$ (albite), $K_2O*Al_2O_3*6SiO_2$ (K-feldspar), $MgO*Al_2O_3*2.5SiO_2$ (cordierite, which can also be presented as $2MgO*2Al_2O_3*5SiO_2$), $CaO*Al_2O_3*2SiO_2$ (anorthite), $SrO*Al_2O_3*2SiO_2$ (Sr-feldspar) and $BaO*Al_2O_3*2SiO_2$ (celsian).

If the amount of silica and alumina in the glass composition is sufficient for forming all of the listed crystalline phases, the residual amount of silica can be obtained by deducting the amounts of alkali and alkaline earth metal oxides, multiplied by the stoichiometric coefficients for silica in the formulas of the listed crystalline phases ($Li_2O*4$ for spodumene, $Na_2O*6$ for albite, $CaO*2$ for anorthite, etc.), from the total amount of silica in the glass composition in mol.%. Thus, the residual amount of silica can be evaluated by the formula (VI) above.

It is hypothesized that if the value of $P_{crist}$ is high, cristobalite may possibly precipitate from the glass forming melts at high temperatures. Accordingly, in some embodiments of the present disclosure, the value of $P_{crist}$ is preferably limited.

The modifier-binding parameter $P_{mod}$ is a quantity calculated by formula (VII):

$$P_{mod} = R_2O + RO - Al_2O_3 - P_2O_5 - RE_mO_n \quad (VII)$$

where $R_2O$ is total sum of monovalent metal oxides, RO is total sum of divalent metal oxides, $RE_mO_n$ is total sum of rare earth metal oxides, and chemical formulas mean the amounts of corresponding components in the glass composition in mol.%.

The modifier-binding parameter $P_{mod}$ evaluates the total amount of modifiers (monovalent metal oxides $R_2O$ and divalent metal oxides RO) that can be chemically bounded with the network formers - alumina ($Al_2O_3$), phosphorus oxide ($P_2O_5$) and rare earth metal oxides ($RE_mO_n$) - of the glass compositions disclosed herein. Assuming one mole of modifier ($R_2O$ and RO) binds with one mole of network former, the difference between the total content of modifiers and the total content of network formers gives the value of $P_{mod}$ as presented in the formula (VII) above.

Without being bound to a specific theory, the authors believe that if the parameter $P_{mod}$ has a large positive value, it may mean that the glass structure may contain a significant amount of modifiers that may form non-bridging oxygen atoms, which, in turn, may cause a decrease in the low-temperature viscosity and, in particular, a decrease in the annealing and strain points, which may reduce the possibility of using the glass as a material for the memory recording media suitable to the HAMR process as specified above.

Accordingly, in some embodiments of the present disclosure, the glass compositions are preferably characterized by negative, zero or small positive values of $P_{mod}$.

The aluminum-binding parameter $P_{Al}$ is a quantity calculated by formula (VIII):

$$P_{Al} = R_2O + RO + P_2O_5 + 1.6*RE_mO_n - Al_2O_3, \quad (VIII)$$

where $R_2O$ is total sum of monovalent metal oxides, RO is total sum of divalent metal oxides, $RE_mO_n$ is total sum of rare earth metal oxides, and chemical formulas mean the amounts of corresponding components in the glass composition in mol.%.

The aluminum-binding parameter $P_{Al}$ estimates the amount of alumina that can be chemically bounded with other oxides, such as modifiers ($R_2O$ and RO), phosphorus oxide ($P_2O_5$) and rare earth metal oxides ($RE_mO_n$). Without being bound to a specific theory, it is hypothesized that one mole of alumina can possibly react or bind with either one mole of modifiers, one mole of $P_2O_5$, or 1.6 moles of $RE_mO_n$ (the figure for $RE_mO_n$ is selected on the basis of known compositions of rare earth aluminates, such as yttrium alumina garnet (YAG, $Y_3Al_5O_{12}$), lanthanum aluminate ($La_3Al_5O_{12}$) and others). Under this hypothesis, the difference between the total sum of the oxides in mol.% (weighted by the stoichiometric coefficients noted above) and the concentration of alumina in mol.% in the glass composition characterizes the lack or excess of alumina comparing to the oxides.

Without being bound to a specific theory, it is hypothesized that an excess of alumina relative to the above-enumerated oxides ($R_2O$, RO, $P_2O_5$, $RE_mO_n$) may potentially cause precipitation of alumina or alumina-rich crystalline phases, such as, for example, beta-alumina ($X*6Al_2O_3$, where "X" refers to one or more of monovalent or divalent metal oxides), mullite ($3Al_2O_3*2SiO_2$), corundum ($Al_2O_3$) and others, from the glass forming melts at high temperatures, thus increasing the liquidus temperature and reducing the liquidus viscosity. Accordingly, in some embodiments of the present disclosure, the glass compositions are preferably characterized by negative, zero or small positive values of $P_{Al}$.

The annealing point An.P., specific modulus $E/d_{RT}$ and $T_{160kP}$ are properties of glass that can be predicted from the glass composition. A linear regression analysis of the Exemplary Glasses of the present disclosure in the EXAMPLES section below and other glass compositions reported in the literature was performed to determine equations that can predict the composition dependences of the annealing point, specific modulus, and temperature at which the glass has a viscosity of 160 kP.

The training dataset of glass compositions satisfying the criteria specified in Table 1 below and having measured values of the properties of interest, about 100 glass compositions for each property (($An.P.$, $E/d_{RT}$ and $T_{160kP}$)), was randomly selected from the literature data presented in the publicly available SciGlass Information System database and from the Exemplary Glasses from the embodiments presented herein. The linear regression analysis on the above-specified dataset (excluding outliers) was used to determine the formulas (IX), (X), and (XI) below for the predictive parameters $P_{anpt}$, $P_{spm}$, and $P_{160kP}$.. In Table 1, RO is a total sum of divalent metal oxides, $R_2O$ is a total sum of monovalent metal oxides and $RE_mO_n$ is a total sum of rare earth metal oxides.

Another set of glass compositions satisfying the criteria of Table 1 was used as a validation set to evaluate the ability to interpolate within predefined compositional limits. Based on the validation analysis, interpolation to within standard deviations specified in the Table 2 was possible. An external dataset of prior art glass compositions, also randomly selected from the SciGlass Information System database, was used to evaluate the ability to predict the properties outside of the specified compositional limits with a reasonable accuracy. Multiple iterations of this process were performed in order to determine the best variant for each property, corresponding to the regression formulas for the parameters specified in Table 2.

The data for the Comparative Glass compositions used in the linear regression modeling, including the training dataset, validation dataset and external dataset were obtained from the publically available SciGlass Information System database. Formulas (IX), (X) and (XI) below were obtained from the linear regression analysis and used to predict the annealing point, specific modulus, and temperature at which the viscosity is 160 kP, respectively, of the glasses:

$$P_{anpt} = 664.7 + 5.2303 * SiO_2 - 11.493 * B_2O_3 - 7.1742 * P_2O_5 + 8.3980 * ZrO_2 - 2.0585 * MgO - 2.1088 * CaO - 3.8995 * BaO - 10.323 * ZnO - 9.0727 * MnO - 23.455 * Li_2O - 33.819 * Na_2O - 25.204 * K_2O + 15.745 * Y_2O_3 + 8.9047 * La_2O_3 - 33.960 * (Fe_2O_3 + FeO) - 5.6704 * (R_2O + RO - Al_2O_3) - 4.2545 * (SiO_2 - (6 * K_2O + 6 * Na_2O + 4 * Li_2O + 2 * RO)) - 19.439 * Cu_2O, \tag{IX}$$

$$P_{spm} = 32.10 + 0.47744 * SiO_2 - 1.6506 * Al_2O_3 - 0.11775 * B_2O_3 - 0.30166 * P_2O_5 + 0.20187 * TiO_2 + 0.20219 * ZrO_2 + 0.96268 * MgO + 0.83379 * CaO + 0.53685 * SrO + 0.41218 * BaO + 0.63264 * ZnO + 0.75365 * MnO + 0.62984 * CuO - 1.2496 * Na_2O - 1.5154 * K_2O + 1.4746 * Cu_2O - 0.037941 * Y_2O_3 - 0.75836 * La_2O_3 - 1.8052 * (R_2O + RO - Al_2O_3) - 0.47488 * (SiO_2 - (6 * K_2O + 6 * Na_2O + 4 * Li_2O + 2 * RO)), \tag{X}$$

$$P_{160kP} = 1058 + 2.5492 * SiO_2 - 25.725 * Al_2O_3 - 11.327 * B_2O_5 - 14.309 * TiO_2 - 11.594 * ZrO_2 + 30.559 * MgO + 29.290 * CaO + 30.592 * SrO + 30.079 * BaO + 23.323 * ZnO + 19.724 * MnO + 11.888 * PbO + 11.462 * CuO + 17.090 * Li_2O + 16.475 * Na_2O + 11.386 * K_2O + 14.422 * Y_2O_3 - 36.909 * La_2O_3 - 34.144 * (Fe_2O_3 + FeO) - 35.001 * (R_2O + RO - Al_2O_3). \tag{XI}$$

In Formulas (IX), (X) and (XI) and Tables 1 and 2, annealing point parameter $P_{anpt}$ is a parameter that predicts the annealing point [°C], calculated from the components of the glass composition expressed in mol.%; specific modulus parameter $P_{spm}$ is a parameter that predicts the specific modulus $E/d_{RT}$ [GPa·cm$^3$/g], calculated from the components of the glass composition expressed in mol.%; and the parameter $P_{160kP}$ is a parameter that predicts the glass temperature corresponding to a viscosity of 160 kP [°C], calculated from the components of the glass composition expressed in mol.%.

In Formulas (IX), (X) and (XI), each component of the glass composition is listed in terms of its chemical formula, where the chemical formula refers to the concentration of the component expressed in mol.%. For example, for purposes of Formulas (IX), (X) and (XI), $SiO_2$ refers to the concentration of $SiO_2$, expressed in mol.%, in the glass composition. It is understood that not all components listed in Formulas (IX), (X) and (XI) are necessarily present in a particular glass composition and that Formulas (IX), (X) and (XI) are equally valid for glass compositions that contain less than all of the components listed in the formulas. It is further understood that Formulas (IX), (X) and (XI) are also valid for glass compositions within the scope and claims of the present disclosure that contain components in addition to the components listed in the formulas. If a component listed in Formulas (IX), (X) and (XI) is absent in a particular glass composition, the concentration of the component in the glass composition is 0 mol.% and the contribution of the component to the value calculated from the formulas is zero.

**Table 1. Composition Space Used for Modeling**

| Property | An.P., °C | | E/d$_{RT}$, GPa·cm$^3$/g | | T$_{160kP}$, °C | |
|---|---|---|---|---|---|---|
| Component | Min, mol. % | Max, mol. % | Min, mol. % | Max, mol. % | Min, mol. % | Max, mol. % |
| SiO$_2$ | 60 | 75 | 60 | 75 | 60 | 75 |
| Al$_2$O$_3$ | 10 | 20 | 10 | 20 | 10 | 20 |
| Li$_2$O | 0 | 10 | 0 | 10 | 0 | 10 |
| Na$_2$O | 0 | 10 | 0 | 10 | 0 | 10 |
| K$_2$O | 0 | 5 | 0 | 5 | 0 | 5 |
| BaO | 0 | 5 | 0 | 5 | 0 | 5 |
| B$_2$O$_3$ | 0 | 3 | 0 | 3 | 0 | 3 |
| La$_2$O$_3$ | 0 | 3 | 0 | 3 | 0 | 3 |
| RO | 3 | Not limited | 3 | Not limited | 3 | Not limited |
| R$_2$O | 2.5 | Not limited | 2.5 | Not limited | 2.5 | Not limited |
| F | 0 | 0.05 [at.%] | 0 | 1 [at.%] | 0 | 1 [at.%] |
| ZrO$_2$ + TiO$_2$ + FeO + Fe$_2$O$_3$ | 0 | 5 | 0 | 5 | 0 | 5 |
| R$_2$O + RO + P$_2$O$_5$ + 1.6 * REmOn - Al$_2$O$_3$ | -5 | Not limited | -5 | Not limited | -5 | Not limited |
| R$_2$O + RO - Al$_2$O$_3$ - P$_2$O$_5$ - RE$_m$O$_n$ | Not limited | 5 | Not limited | 5 | Not limited | 5 |
| R$_2$O - Al$_2$O$_3$ | Not limited | 0 | Not limited | 0 | Not limited | 0 |
| Other species | 0 | Not limited | 0 | Not limited | 0 | Not limited |

**Table 2. Property prediction models**

| Property | Abbreviation | Unit | Predicting Parameter | Regression Formula | Composition Unit | Standard error |
|---|---|---|---|---|---|---|
| Annealing point | An.P. | °C | P$_{anpt}$ | Formula (IX) | mol.% | 22 |
| Specific modulus | E/d$_{RT}$ | GPa·cm$^3$/g | P$_{spm}$ | Formula (X) | mol.% | 0.32 |
| Temperature corresponding to a viscosity of 160 kP | T$_{160kP}$ | °C | P$_{160kP}$ | Formula (XI) | mol.% | 37 |

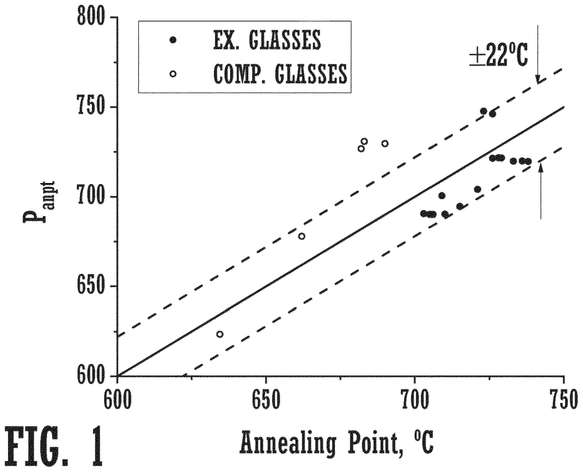

FIG. 1 is a plot of the parameter P$_{anpt}$ calculated by Formula (IX) as a function of measured annealing point An.P. for some Literature Glasses ("Comp. Glasses") and some Exemplary Glasses ("Ex. Glasses"). As illustrated by the data in FIG. 1, the compositional dependence of the parameter P$_{anpt}$ had an error within a range of $\pm$ 22 °C of the measured An.P. for the majority of glasses, which corresponds to the standard error specified in Table 2.

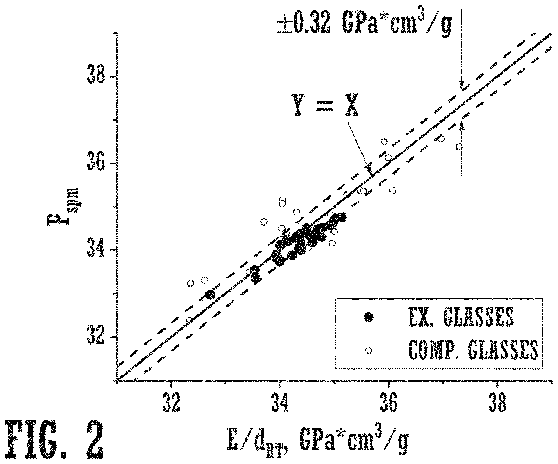

FIG. 2 is a plot of the parameter P$_{spm}$ calculated by Formula (X) as a function of measured specific modulus E/d$_{RT}$ for some Literature Glasses ("Comp. Glasses") and some Exemplary Glasses ("Ex. Glasses"). As illustrated by the data in FIG. 2, the compositional dependence of the parameter P$_{spm}$ had an error within a range of $\pm$ 0.32 GPa·cm$^3$/g of the measured E/d for the majority of glasses, which corresponds to the standard error specified in Table 2.

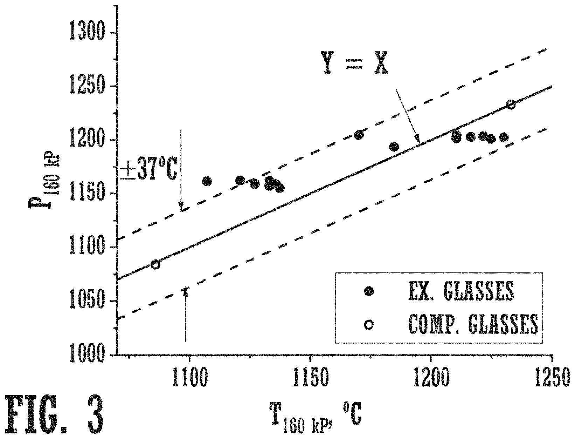

FIG. 3 is a plot of the parameter P$_{160kP}$ calculated by Formula (XI) as a function of the measured temperature T$_{160kP}$ at which the glass has a viscosity of 160 kP for some Literature Glasses ("Comp. Glasses") and some Exemplary Glasses ("Ex. Glasses"). As illustrated by the data in FIG. 3, the compositional dependence of the parameter $P_{160kP}$ had an error within a range of $\pm$ 37 °C of the measured $T_{160kP}$ for the majority of glasses, which corresponds to the standard error specified in Table 2.

Table 3 identifies the combination of components and their respective amounts according to some embodiments of the present disclosure. The Exemplary Glasses A in Table 3 may include additional components according to any aspects of the present disclosure as described herein.

**Table 3: Exemplary Glasses A** (not according to independent claim 1)

| Component | Amount (mol.%) |
|---|---|
| $SiO_2$ | 60.0 to 75.0 mol.% |
| $Al_2O_3$ | 10.0 to 18.0 mol.% |
| $Li_2O$ | 0.0 to 10.0 mol.% |
| $Na_2O$ | 0.0 to 5.0 mol.% |
| Sum of (CaO+MgO) | ⬚ 5.0 mol.% |
| Sum of ($Li_2O$+$Na_2O$) | ⬚ 0.5 mol.% |
| Sum of ($Li_2O$+MgO) | 0.0 to 10.0 mol.% |
| Sum of (MgO+ZnO) | 0.0 to 10.0 mol.% |
| Sum of (CaO+SrO) | 0.0 to 9.0 mol.% |

Exemplary Glasses A according to embodiments of the present disclosure may optionally fluorine (F) in an amount 0.0 to 3.0 at.%.

According to some embodiments of the present disclosure, Exemplary Glasses A may also have an aluminum-binding parameter $P_{Al}$ of greater than or equal to -2.8.

According to some embodiments of the present disclosure, Exemplary Glasses A may also have a modifier-binding parameter $P_{mod}$ of less than or equal to 2.8.

According to some embodiments of the present disclosure, Exemplary Glasses A may also have an anorthite precipitation parameter $P_{anort}$ of less than or equal to 10.

Table 4 identifies the combination of components and their respective amounts according to some embodiments of the present disclosure. The Exemplary Glasses B in Table 4 may include additional components according to any aspects of the present disclosure as described herein.

**Table 4: Exemplary Glasses B**

| Component | Amount (mol.%) |
|---|---|
| $SiO_2$ | 60.0 to 80.0 mol.% |
| $Al_2O_3$ | 10.0 to 18.0 mol.% |
| $Li_2O$ | 0.5 to 7.5 mol.% |

Exemplary Glasses B according to embodiments of the present disclosure may optionally fluorine (F) in an amount 0.0 to 0.5 at.%.

According to some embodiments of the present disclosure, Exemplary Glasses B may also satisfy the following condition:

$$0.00 \leq \min(RE_mO_n, P_2O_5) \leq 0.30$$

where chemical formulas refer to the amounts of components in glass, expressed in mol.%.

According to some embodiments of the present disclosure, Exemplary Glasses B may also have a cristobalite precipitation parameter $P_{crist}$ of less than or equal to 28.

According to some embodiments of the present disclosure, Exemplary Glasses B may also have an anorthite

precipitation parameter $P_{anort}$ of less than or equal to 10.

According to some embodiments of the present disclosure, Exemplary Glasses B may also have a cordierite precipitation parameter $P_{cord}$ of less than or equal to 5.

According to some embodiments of the present disclosure, Exemplary Glasses B may also have a spodumene precipitation parameter $P_{spod}$ of less than or equal to 7.5.

According to some embodiments of the present disclosure, Exemplary Glasses B may also have a specific modulus $E/d_{RT}$ of greater than or equal to 32 GPa·cm³/g.

According to some embodiments of the present disclosure, Exemplary Glasses B may also have an annealing point An.P. of greater than or equal to 680 °C.

According to some embodiments of the present disclosure, Exemplary Glasses B may also have a temperature $T_{160kP}$ corresponding to a viscosity of 160 kP of greater than or equal to 1150 °C.

Table 5 identifies the combination of components and their respective amounts according to some embodiments of the present disclosure. The Exemplary Glasses C in Table 5 may include additional components according to any aspects of the present disclosure as described herein.

Table 5: Exemplary Glasses **C** (not according to independent claim 1)

| Component | Amount (mol.%) |
|---|---|
| $SiO_2$ | 60.0 to 75.0 mol.% |
| $Al_2O_3$ | 10.5 to 18.0 mol.% |
| CaO | 0.0 to 10.0 mol.% |
| $Li_2O$ | 0.0 to 7.8 mol.% |
| MgO | 0.0 to 4.3 mol.% |
| $ZrO_2$ | 0.0 to 0.5 mol.% |
| Total sum of rare earth metal oxides $RE_mO_n$ | 0.0 to 5.0 mol.% |

Exemplary Glasses C according to embodiments of the present disclosure may have a cristobalite precipitation parameter $P_{crist}$ of less than or equal to 28.

According to some embodiments of the present disclosure, Exemplary Glasses C may also have an anorthite precipitation parameter $P_{anort}$ of less than or equal to 10.

According to some embodiments of the present disclosure, Exemplary Glasses C may also have a modifier-binding parameter $P_{mod}$ of greater than or equal to -3.

According to some embodiments of the present disclosure, Exemplary Glasses C may also satisfy the following formula:

$$E/d_{RT} - (92.5 - 0.05 * T_{160kP}) > 0.000,$$

where $E/d_{RT}$ is a specific modulus and $T_{160kP}$ is a temperature corresponding to a glass viscosity of 160 kP.

EXAMPLES (Examples 1-18, 27-28, 38-45, 49, 52-53, 55-57 and 59-65 are not according to independent claim 1)

The following examples describe various features and advantages provided by the disclosure, and are in no way intended to limit the invention and appended claims. Examples 1-18, 27-28, 38-45, 49, 52-53, 55-57 and 59-65 are not according to independent claim 1.

Glass compositions were prepared and analyzed. The analyzed glass compositions included the components listed in Table 6 below. Example glasses were melted with conventional raw materials, such as sand, aluminum oxide, alkali carbonates, alkali nitrates, spodumene, nepheline syenite, borax, boric acid, aluminum metaphosphate, disodium phosphate, magnesium oxide, rare earth metal oxides, tin oxide, and various combinations. The glasses were melted in platinum crucibles between 1500 °C and 1575 °C for 5 to 6 hours, poured as a relatively thin stream into a water bath to quench the molten glass into small particles (drigaged) and then re-melted at a higher temperature of 1650 °C for 5 to 6 hours to improve homogeneity and melt quality. The glasses were then cast onto a steel plate, annealed for 1 hour near the anneal temperatures given in Table 6 below, and cooled to room temperature to form final glass articles.

**Table 6. Exemplary Glass Compositions**

| Exemplary Glass | | 1 | 2 | 3 | 4 | 5 | 6 | 7 | 8 |
|---|---|---|---|---|---|---|---|---|---|
| Composition - mol.% | | | | | | | | | |
| $SiO_2$ | mol.% | 65.22 | 65.41 | 64.53 | 63.99 | 66.66 | 69.12 | 65.87 | 65.83 |
| $Al_2O_3$ | mol.% | 17.41 | 17.43 | 17.90 | 17.87 | 16.89 | 15.95 | 17.87 | 17.87 |
| $Li_2O$ | mol.% | 5.94 | 6.18 | 6.27 | 4.87 | 5.37 | 5.85 | 6.64 | 6.54 |
| CaO | mol.% | 1.99 | 4.02 | 4.01 | 3.98 | 3.98 | 4.01 | 3.01 | 4.02 |
| MgO | mol.% | 3.97 | 1.98 | 1.98 | 1.98 | 1.98 | 1.98 | 0.97 | 0.09 |
| $Na_2O$ | mol.% | 3.36 | 3.48 | 3.42 | 4.61 | 3.68 | 2.73 | 3.44 | 3.46 |
| $P_2O_5$ | mol.% | 0.85 | 1.14 | 1.53 | 2.34 | 1.08 | 0 | 1.84 | 1.83 |
| $B_2O_3$ | mol.% | 0.90 | 0 | 0 | 0 | 0 | 0 | 0 | 0 |
| $K_2O$ | mol.% | 0.20 | 0.20 | 0.20 | 0.20 | 0.20 | 0.20 | 0.20 | 0.20 |
| $SnO_2$ | mol.% | 0.15 | 0.15 | 0.15 | 0.15 | 0.15 | 0.15 | 0.15 | 0.15 |
| $Fe_2O_3$ | mol.% | 0.01 | 0.01 | 0.01 | 0.01 | 0.01 | 0.01 | 0.01 | 0.01 |
| Composition constraints | | | | | | | | | |
| CaO + SrO | mol.% | 1.990 | 4.020 | 4.010 | 3.979 | 3.980 | 4.010 | 3.010 | 4.020 |
| CaO + MgO | mol.% | 5.961 | 6.000 | 5.990 | 5.960 | 5.959 | 5.990 | 3.980 | 4.110 |
| $Li_2O$ + $Na_2O$ | mol.% | 9.300 | 9.659 | 9.689 | 9.478 | 9.051 | 8.580 | 10.08 | 10.00 |
| $Li_2O$ + MgO | mol.% | 9.911 | 8.159 | 8.249 | 6.849 | 7.350 | 7.829 | 7.610 | 6.629 |
| MgO + ZnO | mol.% | 3.970 | 1.980 | 1.980 | 1.981 | 1.979 | 1.980 | 0.9700 | 0.09000 |
| $ZrO_2$ + $TiO_2$ + FeO + $Fe_2O_3$ | mol.% | 0.010000 | 1.000E-02 | 9.998E-03 | 9.997E-03 | 1.000E-02 | 0.010001 | 9.999E-03 | 0.010001 |
| Measured pro perties | | | | | | | | | |
| $\alpha_{20-300}\times10^7$ | $K^{-1}$ | 47.100 | 50.400 | 50.000 | 50.100 | 47.800 | 46.200 | 49.500 | 50.200 |
| Str.P. | °C | 651 | 664 | 661 | 664 | 671 | 679 | 665 | 673 |
| An.P. | °C | 699 | 712 | 710 | 713 | 721 | 728 | 716 | 723 |
| $T_{soft}$ | °C | 930 | 942 | 939 | 948 | 956 | 967 | 955 | 960 |
| $T_{160kP}$ | °C | 1107 | 1124 | 1123 | 1137 | 1140 | 1151 | 1143 | 1151 |
| $T_{35kP}$ | °C | 1181 | 1198 | 1198 | 1214 | 1216 | 1228 | 1220 | 1228 |
| $T_{200 P}$ | °C | 1571 | 1590 | 1591 | 1611 | 1615 | 1630 | 1624 | 1628 |
| $T_{liq}$ | °C | >1350 | >1305 | >1300 | 1335 | 1310 | 1295 | >1350 | 1345 |
| $\log(\eta_{liq})$ | P | 3.38 | 3.76 | 3.81 | 3.69 | 3.86 | 4.05 | 3.64 | 3.72 |

## EP 4 238 943 B1

(continued)

| Measured properties | | | | | | | | | |
|---|---|---|---|---|---|---|---|---|---|
| E | GPa | 85.640 | 85.290 | 85.080 | 83.020 | 84.670 | 85.840 | 83.500 | 83.150 |
| G | GPa | 34.890 | 34.890 | 34.750 | 33.990 | 34.680 | 35.230 | 34.270 | 34.200 |
| $E/d_{RT}$ | GPa·cm³/g | 35.000 | 34.800 | 34.700 | 33.900 | 34.600 | 35.100 | 34.300 | 34.200 |
| $d_{RT}$ | g/cm³ | 2.444 | 2.452 | 2.453 | 2.447 | 2.447 | 2.443 | 2.431 | 2.434 |
| Predicted and calculated properties | | | | | | | | | |
| $P_{anort}$ | | 5.5833 | 7.6455 | 7.6252 | 8.8092 | 7.8656 | 6.9109 | 6.6386 | 7.6568 |
| $P_{cord}$ | | 3.9877 | 1.9934 | 1.9938 | 1.9939 | 1.9943 | 1.9941 | 0.99785 | 0.11337 |
| $P_{spod}$ | | 5.9599 | 6.2501 | 6.3182 | 4.7043 | 5.3023 | 5.8515 | 6.7991 | 6.6516 |
| $P_{crist}$ | | 5.1090 | 4.7247 | 3.6404 | 2.5914 | 8.4910 | 14.524 | 7.3384 | 8.0376 |
| $P_{mod}$ | | -2.6835 | -2.6250 | -3.4590 | -4.7228 | -2.7830 | -1.0930 | -5.2663 | -5.2561 |
| $P_{Al}$ | | -0.94912 | -0.29191 | -0.34876 | 0.04274 | -0.58979 | -1.0930 | -1.5574 | -1.5515 |
| $P_{spm}$ [for $E/d_{RT}$] | GPa·cm³/g | 34.74 | 34.51 | 34.47 | 33.83 | 34.32 | 34.75 | 34.35 | 34.21 |
| $P_{anpt}$ [for An.P.] | °C | 693.3 | 696.8 | 695.3 | 692.0 | 704.1 | 715.5 | 686.9 | 688.1 |
| $P_{160kP}$ [for $T_{160kP}$] | °C | 1162 | 1160 | 1157 | 1155 | 1172 | 1188 | 1159 | 1159 |
| $P_{spm}$ - (92.5 - 0.05 * $P_{160kP}$) | | 0.4714 | 0.1683 | 0.0318 | -0.9212 | 0.4787 | 1.7666 | 0.0406 | -0.1057 |

**Table 6 Continued**

| Exemplary Glass | | 9 | 10 | 11 | 12 | 13 | 14 | 15 | 16 |
|---|---|---|---|---|---|---|---|---|---|
| Composition - mol.% | | | | | | | | | |
| $SiO_2$ | mol.% | 67.09 | 64.37 | 67.14 | 64.47 | 63.75 | 63.89 | 63.94 | 63.93 |
| $Al_2O_3$ | mol.% | 16.85 | 17.84 | 16.81 | 17.80 | 18.04 | 17.96 | 17.97 | 17.99 |
| $Li_2O$ | mol.% | 6.01 | 5.59 | 5.80 | 5.38 | 7.12 | 7.12 | 7.10 | 7.08 |
| CaO | mol.% | 4.00 | 4.01 | 6.00 | 6.00 | 4.03 | 3.00 | 2.00 | 1.00 |
| MgO | mol.% | 1.97 | 1.98 | 0.12 | 0.12 | 0.98 | 1.98 | 2.97 | 3.96 |
| $Na_2O$ | mol.% | 3.03 | 3.93 | 3.09 | 3.96 | 2.11 | 2.12 | 2.10 | 2.10 |
| $P_2O_5$ | mol.% | 0.69 | 1.92 | 0.68 | 1.91 | 3.71 | 3.67 | 3.66 | 3.68 |
| $K_2O$ | mol.% | 0.20 | 0.20 | 0.20 | 0.20 | 0.10 | 0.10 | 0.10 | 0.10 |
| $SnO_2$ | mol.% | 0.15 | 0.15 | 0.15 | 0.15 | 0.15 | 0.15 | 0.15 | 0.15 |
| $Fe_2O_3$ | mol.% | 0.01 | 0.01 | 0.01 | 0.01 | 0.01 | 0.01 | 0.01 | 0.01 |

(continued)

| Composition constraints | | | | | | | | | |
|---|---|---|---|---|---|---|---|---|---|
| CaO + SrO | mol.% | 4.000 | 4.010 | 6.000 | 6.001 | 4.029 | 3.000 | 2.000 | 0.9999 |
| CaO + MgO | mol.% | 5.970 | 5.990 | 6.120 | 6.121 | 5.009 | 4.981 | 4.970 | 4.960 |
| $Li_2O$ + $Na_2O$ | mol.% | 9.039 | 9.520 | 8.890 | 9.341 | 9.230 | 9.239 | 9.199 | 9.179 |
| $Li_2O$ + MgO | mol.% | 7.979 | 7.570 | 5.919 | 5.501 | 8.100 | 9.100 | 10.07 | 11.04 |
| MgO + ZnO | mol.% | 1.970 | 1.980 | 0.1200 | 0.1200 | 0.9799 | 1.981 | 2.970 | 3.960 |
| $ZrO_2$ + $TiO_2$ + FeO + $Fe_2O_3$ | mol.% | 1.000E-02 | 9.998E-03 | 0.010001 | 0.010001 | 9.999E-03 | 9.997E-03 | 1.000E-02 | 9.999E-03 |
| Measured pro perties | | | | | | | | | |
| $\alpha_{20\text{-}300} \times 10^7$ | $K^{-1}$ | 47.300 | 49.200 | 49.400 | 51.300 | 45.700 | 44.600 | 43.700 | 42.200 |
| Str.P. | °C | 670 | 663 | 688 | 678 | 659 | 656 | 653 | 652 |
| An.P. | °C | 720 | 712 | 737 | 728 | 710 | 706 | 705 | 703 |
| $T_{soft}$ | °C | 955 | 947 | 967 | 961 | 947 | 946 | 945 | 943 |
| $T_{160kP}$ | °C | 1134 | 1136 | 1144 | 1137 | 1137 | | 1133 | 1127 |
| $T_{35kP}$ | °C | 1209 | 1212 | 1219 | 1211 | 1214 | 1212 | 1209 | 1203 |
| $T_{200 P}$ | °C | 1607 | 1604 | 1616 | 1599 | 1612 | 1609 | 1602 | 1597 |
| $T_{li}q$ | °C | 1315 | 1325 | 1300 | 1300 | 1280 | >1320 | >1335 | >1300 |
| $\log(\eta_{liq})$ | P | 3.78 | 3.73 | 3.94 | 3.88 | 4.05 | | 3.65 | 3.85 |
| E | GPa | 85.640 | 84.260 | 84.670 | 83.360 | 82.400 | 82.600 | 83.080 | 83.290 |
| G | GPa | 35.030 | 34.480 | 34.680 | 34.060 | 33.850 | 33.920 | 33.990 | 34.270 |
| $E/d_{RT}$ | $GPa{\cdot}cm^3/g$ | 35.000 | 34.400 | 34.500 | 33.900 | 34.000 | 34.100 | 34.400 | 34.500 |
| $d_{RT}$ | $g/cm^3$ | 2.448 | 2.451 | 2.453 | 2.456 | 2.423 | 2.420 | 2.417 | 2.415 |
| Predicted and calculated properties | | | | | | | | | |
| $P_{anort}$ | | 7.2275 | 8.1340 | 9.2570 | 10.163 | 6.2238 | 5.2277 | 4.2299 | 3.2340 |
| $P_{cord}$ | | 1.9937 | 1.9950 | 0.15720 | 0.15605 | 0.99683 | 1.9942 | 2.9919 | 3.9882 |
| $P_{spod}$ | | 6.0307 | 5.4717 | 5.7513 | 5.2056 | 6.9861 | 6.9860 | 6.9881 | 6.9875 |
| $P_{crist}$ | | 9.7140 | 3.9111 | 11.308 | 5.4590 | 11.675 | 11.171 | 10.667 | 10.167 |
| $P_{mod}$ | | -2.2927 | -4.1964 | -2.3415 | -4.2330 | -7.5157 | -7.5129 | -7.5094 | -7.5136 |
| $P_{Al}$ | | -0.89687 | -0.28859 | -0.96807 | -0.35083 | -0.0591 | -0.05621 | -0.05267 | -0.05724 |

(continued)

| Predicted and calculated properties | | | | | | | | | |
|---|---|---|---|---|---|---|---|---|---|
| $P_{spm}$ [for $E/d_{RT}$] | GPa·cm³/g | 34.64 | 34.17 | 34.37 | 33.89 | 34.11 | 34.24 | 34.37 | 34.50 |
| $P_{anpt}$ [for An.P.] | °C | 707.0 | 695.4 | 710.1 | 698.1 | 690.3 | 690.2 | 690.2 | 690.5 |
| $P_{160kP}$ [for $T_{160kP}$] | °C | 1175 | 1159 | 1177 | 1160 | 1155 | 1156 | 1157 | 1159 |
| Pspm - (92.5 - 0.05 * $P_{160kP}$) | | 1.0443 | -0.3727 | 0.7290 | -0.6402 | -0.6555 | -0.4635 | -0.2129 | -0.0080 |

**Table 6 Continued**

| Exemplary Glass | | 17 | 18 | 19 | 20 | 21 | 22 | 23 | 24 |
|---|---|---|---|---|---|---|---|---|---|
| Composition - mol.% | | | | | | | | | |
| $SiO_2$ | mol.% | 64.94 | 64.11 | 74.16 | 74.46 | 74.40 | 74.47 | 74.53 | 74.36 |
| $Al_2O_3$ | mol.% | 17.64 | 17.96 | 12.34 | 12.39 | 12.41 | 12.39 | 12.41 | 12.40 |
| $Li_2O$ | mol.% | 7.13 | 6.41 | 4.12 | 4.06 | 3.97 | 3.07 | 3.04 | 3.10 |
| CaO | mol.% | 3.99 | 3.99 | 4.12 | 2.99 | 2.02 | 3.99 | 2.98 | 2.01 |
| MgO | mol.% | 0.98 | 2.42 | 2.02 | 2.94 | 4.01 | 1.96 | 2.93 | 3.97 |
| $Na_2O$ | mol.% | 2.11 | 3.25 | 2.95 | 2.88 | 2.91 | 3.84 | 3.83 | 3.88 |
| $P_2O_5$ | mol.% | 2.95 | 1.50 | 0 | 0 | 0 | 0 | 0 | 0 |
| $K_2O$ | mol.% | 0.10 | 0.20 | 0.14 | 0.13 | 0.14 | 0.13 | 0.13 | 0.13 |
| $SnO_2$ | mol.% | 0.15 | 0.15 | 0.14 | 0.14 | 0.13 | 0.14 | 0.14 | 0.14 |
| $Fe_2O_3$ | mol.% | 0.01 | 0.01 | 0.01 | 0.01 | 0.01 | 0.01 | 0.01 | 0.01 |
| Composition constraints | | | | | | | | | |
| CaO + SrO | mol.% | 3.990 | 3.990 | 4.120 | 2.990 | 2.021 | 3.990 | 2.981 | 2.010 |
| CaO + MgO | mol.% | 4.970 | 6.411 | 6.141 | 5.931 | 6.031 | 5.949 | 5.911 | 5.980 |
| $Li_2O$ + $Na_2O$ | mol.% | 9.238 | 9.661 | 7.069 | 6.941 | 6.880 | 6.909 | 6.870 | 6.980 |
| $Li_2O$ + MgO | mol.% | 8.109 | 8.831 | 6.140 | 7.001 | 7.981 | 5.029 | 5.970 | 7.071 |
| MgO + ZnO | mol.% | 0.9801 | 2.420 | 2.021 | 2.941 | 4.011 | 1.960 | 2.931 | 3.970 |
| $ZrO_2$ + $TiO_2$ + FeO + $Fe_2O_3$ | mol.% | 9.999E-03 | 0.010000 | 0.010001 | 0.010002 | 0.010003 | 9.999E-03 | 0.010002 | 0.010000 |

(continued)

| Measured properties | | | | | | | | | |
|---|---|---|---|---|---|---|---|---|---|
| $\alpha_{20-300} \times 10^7$ | $K^{-1}$ | 45.600 | 48.400 | 43.400 | 42.100 | 40.000 | 44.500 | 42.300 | 39.200 |
| Str.P. | °C | 664 | 660 | 670 | 674 | 672 | 681 | 680 | 678 |
| An.P. | °C | 715 | 709 | 726 | 729 | 728 | 738 | 736 | 733 |
| $T_{soft}$ | °C | 951 | 938 | 989 | 999 | 999 | 1010 | 1008 | 1006 |
| $T_{160kP}$ | °C | 1133 | 1121 | 1210 | 1216 | 1210 | 1225 | 1230 | 1222 |
| $T_{35kP}$ | °C | 1209 | 1195 | 1301 | 1304 | 1298 | 1315 | 1321 | 1310 |
| $T_{200P}$ | °C | 1605 | 1587 | 1741 | 1754 | 1744 | 1772 | 1777 | 1757 |
| $T_{liq}$ | °C | >1280 | >1330 | 1225 | 1295 | 1200 | 1225 | 1180 | 1200 |
| $\log(\eta_{liq})$ | P | 4.01 | 3.59 | 5.09 | 4.61 | 5.29 | 5.20 | 5.61 | 5.38 |
| E | GPa | 83.220 | 85.770 | 82.740 | 83.150 | 83.500 | 81.910 | 82.330 | 82.670 |
| G | GPa | 34.060 | 35.030 | 34.200 | 34.410 | 34.540 | 33.920 | 33.990 | 34.200 |
| $E/d_{RT}$ | GPa·cm³/g | 34.300 | 34.900 | 34.300 | 34.600 | 34.800 | 34.000 | 34.200 | 34.400 |
| dRT | g/cm³ | 2.426 | 2.457 | 2.409 | 2.404 | 2.402 | 2.409 | 2.405 | 2.404 |
| Predicted and calculated properties | | | | | | | | | |
| $P_{anort}$ | | 6.2241 | 7.4271 | 7.0084 | 6.0142 | 5.0215 | 7.9985 | 7.0053 | 6.0127 |
| $P_{cord}$ | | 0.99752 | 2.4431 | 1.9876 | 2.9801 | 3.9728 | 1.9863 | 2.9809 | 3.9737 |
| $P_{spod}$ | | 7.0082 | 6.1689 | 3.9722 | 3.9728 | 3.9717 | 2.9794 | 2.9786 | 2.9798 |
| $P_{crist}$ | | 12.644 | 4.1157 | 26.975 | 26.485 | 25.991 | 25.015 | 24.517 | 24.013 |
| $P_{mod}$ | | -6.4085 | -3.4428 | 0.61597 | 0.61503 | 0.61291 | 0.61340 | 0.61273 | 0.61359 |
| $P_{Al}$ | | -0.42705 | -0.37205 | 0.61597 | 0.61503 | 0.61291 | 0.61340 | 0.61273 | 0.61359 |
| $P_{spm}$ [for $E/d_{RT}$] | GPa·cm³/g | 34.29 | 34.57 | 34.04 | 34.17 | 34.30 | 33.75 | 33.87 | 34.00 |
| $P_{anpt}$ [for An.P.] | °C | 694.5 | 700.5 | 721.5 | 721.6 | 721.8 | 719.6 | 719.9 | 719.8 |
| $P_{160kP}$ [for $T_{160kP}$] | °C | 1162 | 1162 | 1202 | 1203 | 1204 | 1201 | 1203 | 1203 |
| $P_{spm}$ - (92.5 - 0.05 * $P_{160kP}$) | | -0.1365 | 0.0720 | 1.3885 | 1.8421 | 2.0447 | 1.3565 | 1.6112 | 1.6558 |

**Table 6 Continued**

| Exemplary Glass | | 25 | 26 | 27 | 28 | 29 | 30 | 31 | 32 |
|---|---|---|---|---|---|---|---|---|---|
| Composition - mol.% | | | | | | | | | |
| $SiO_2$ | mol.% | 73.91 | 73.49 | 74.38 | 73.99 | 73.12 | 72.43 | 74.61 | 74.52 |

(continued)

| Exemplary Glass | | 25 | 26 | 27 | 28 | 29 | 30 | 31 | 32 |
|---|---|---|---|---|---|---|---|---|---|
| Composition - mol.% | | | | | | | | | |
| $Al_2O_3$ | mol.% | 12.84 | 13.33 | 12.44 | 12.85 | 13.34 | 13.81 | 12.47 | 12.46 |
| $Li_2O$ | mol.% | 3.03 | 3.04 | 3.39 | 3.38 | 3.04 | 3.03 | 2.47 | 2.51 |
| CaO | mol.% | 3.05 | 3.03 | 3.11 | 3.08 | 3.05 | 3.04 | 3.50 | 3.02 |
| MgO | mol.% | 2.98 | 2.98 | 2.51 | 2.51 | 3.00 | 2.97 | 2.97 | 3.48 |
| $Na_2O$ | mol.% | 3.92 | 3.86 | 3.91 | 3.92 | 3.89 | 3.86 | 3.86 | 3.88 |
| $Y_2O_3$ | mol.% | 0 | 0 | 0 | 0 | 0.30 | 0.60 | 0 | 0 |
| $K_2O$ | mol.% | 0.15 | 0.15 | 0.15 | 0.16 | 0.15 | 0.15 | 0.01 | 0.01 |
| $SnO_2$ | mol.% | 0.10 | 0.10 | 0.09 | 0.10 | 0.09 | 0.09 | 0.09 | 0.10 |
| $TiO_2$ | mol.% | 0.01 | 0.01 | 0.01 | 0.01 | 0.01 | 0.01 | 0.01 | 0.01 |
| $Fe_2O_3$ | mol.% | 0.01 | 0.01 | 0.01 | 0.01 | 0.01 | 0.01 | 0.01 | 0.01 |
| Composition constraints | | | | | | | | | |
| CaO + SrO | mol.% | 3.050 | 3.030 | 3.110 | 3.080 | 3.051 | 3.041 | 3.500 | 3.019 |
| CaO + MgO | mol.% | 6.030 | 6.010 | 5.621 | 5.589 | 6.050 | 6.011 | 6.470 | 6.498 |
| $Li_2O$ + $Na_2O$ | mol.% | 6.950 | 6.901 | 7.301 | 7.297 | 6.931 | 6.890 | 6.330 | 6.388 |
| $Li_2O$ + MgO | mol.% | 6.009 | 6.021 | 5.900 | 5.888 | 6.039 | 6.000 | 5.439 | 5.988 |
| MgO + ZnO | mol.% | 2.980 | 2.980 | 2.510 | 2.509 | 2.999 | 2.971 | 2.970 | 3.479 |
| $ZrO_2$ + $TiO_2$ + FeO + $Fe_2O_3$ | mol.% | 0.02000 | 0.02000 | 0.02001 | 0.02000 | 0.02000 | 0.02000 | 0.02000 | 0.02000 |
| Measured properties | | | | | | | | | |
| $\alpha_{20-300} \times 10^7$ | $K^{-1}$ | 42.800 | 42.600 | 44.900 | 44.600 | 42.900 | 43.500 | 41.300 | 41.420 |
| Str.P. | °C | 680 | 685 | 671 | 676 | 682 | 684 | 690 | 688 |
| An.P. | °C | 736 | 740 | 727 | 730 | 736 | 738 | 746 | 744 |
| $T_{soft}$ | °C | 1007 | 1008 | 1003 | 1003 | 998 | 993 | 1018 | 1016 |
| $T_{35kP}$ | °C | 1310 | 1304 | 1306 | 1297 | 1294 | 1277 | | |
| $T_{200 P}$ | °C | 1749 | 1738 | 1753 | 1741 | 1721 | 1700 | | |
| $T_{liq}$ | °C | 1205 | 1235 | 1205 | 1205 | 1195 | 1205 | 1220 | 1215 |
| E | GPa | 82.740 | 83.290 | 82.190 | 82.400 | 83.640 | 84.460 | 82.330 | 82.600 |
| G | GPa | 34.200 | 34.340 | 33.990 | 34.130 | 34.480 | 34.680 | 34.060 | 34.130 |

(continued)

| Measured properties | | | | | | | | | |
|---|---|---|---|---|---|---|---|---|---|
| E/d$_{RT}$ | GPa·cm$^3$/g | 34.330 | 34.500 | 34.190 | 34.230 | 34.390 | 34.420 | 34.190 | 34.300 |
| d$_{RT}$ | g/cm$^3$ | 2.410 | 2.414 | 2.404 | 2.407 | 2.432 | 2.454 | 2.408 | 2.408 |
| Predicted and calculated properties | | | | | | | | | |
| P$_{anort}$ | | 7.0449 | 7.0455 | 7.0444 | 7.0451 | 7.0451 | 7.0456 | 7.4690 | 6.9696 |
| P$_{cord}$ | | 2.9926 | 2.9927 | 2.4942 | 2.4943 | 2.9933 | 2.9933 | 2.9933 | 3.4921 |
| P$_{spod}$ | | 2.9920 | 2.9908 | 3.4903 | 3.4908 | 2.9922 | 2.9919 | 2.4931 | 2.4941 |
| P$_{crist}$ | | 23.709 | 23.210 | 23.366 | 22.960 | 22.908 | 22.110 | 26.152 | 25.898 |
| P$_{mod}$ | | 0.23759 | -0.26460 | 0.63876 | 0.23711 | -0.55723 | -1.3549 | 0.48917 | 0.48719 |
| P$_{AI}$ | | 0.23759 | -0.26460 | 0.63876 | 0.23711 | 0.22086 | 0.20089 | 0.48917 | 0.48719 |
| P$_{spm}$ [for E/d$_{RT}$] | GPa·cm$^3$/g | 33.93 | 34.01 | 33.86 | 33.92 | 33.99 | 34.06 | 33.88 | 33.95 |
| P$_{anpt}$ [for An.P.] | °C | 721.3 | 723.8 | 713.2 | 715.0 | 728.1 | 734.7 | 726.9 | 726.7 |
| P$_{160kP}$ [for T$_{160kP}$] | °C | 1204 | 1207 | 1195 | 1197 | 1211 | 1218 | 1212 | 1212 |
| P$_{spm}$ - (92.5 - 0.05 * P$_{160kP}$) | | 1.6374 | 1.9497 | 1.2074 | 1.4013 | 2.0717 | 2.5249 | 2.1109 | 2.1288 |

## Table 6 Continued

| Exemplary Glass | | 33 | 34 | 35 | 36 | 37 | 38 | 39 | 40 |
|---|---|---|---|---|---|---|---|---|---|
| Composition - mol.% | | | | | | | | | |
| SiO$_2$ | mol.% | 74.64 | 74.29 | 74.48 | 74.68 | 68.75 | 69.62 | 69.62 | 69.87 |
| Al$_2$O$_3$ | mol.% | 12.49 | 12.80 | 12.47 | 12.50 | 13.38 | 12.38 | 12.39 | 12.25 |
| Li$_2$O | mol.% | 3.86 | 3.92 | 3.56 | 4.32 | 4.31 | 3.98 | 3.76 | 3.75 |
| CaO | mol.% | 2.51 | 2.51 | 3.00 | 2.00 | 4.19 | 5.18 | 4.67 | 5.04 |
| MgO | mol.% | 3.51 | 3.49 | 3.47 | 3.49 | 4.40 | 3.40 | 3.96 | 4.33 |
| Na$_2$O | mol.% | 2.88 | 2.87 | 2.90 | 2.89 | 0.02 | 0.02 | 1.94 | 1.88 |
| P$_2$O$_5$ | mol.% | 0 | 0 | 0 | 0 | 2.84 | 2.84 | 2.83 | 2.78 |
| BaO | mol.% | 0 | 0 | 0 | 0 | 0.77 | 0.76 | 0 | 0 |
| SrO | mol.% | 0 | 0 | 0 | 0 | 1.21 | 1.21 | 0.70 | 0 |
| K$_2$O | mol.% | 0.01 | 0.01 | 0.01 | 0.01 | 0.01 | 0.49 | 0.01 | 0 |
| SnO$_2$ | mol.% | 0.09 | 0.09 | 0.09 | 0.09 | 0.10 | 0.10 | 0.10 | 0.10 |
| TiO$_2$ | mol.% | 0.01 | 0.01 | 0.01 | 0.01 | 0.01 | 0.01 | 0.01 | 0 |

(continued)

| Exemplary Glass | | 33 | 34 | 35 | 36 | 37 | 38 | 39 | 40 |
|---|---|---|---|---|---|---|---|---|---|
| Composition - mol.% | | | | | | | | | |
| $Fe_2O_3$ | mol.% | 0.01 | 0.01 | 0.01 | 0.01 | 0.01 | 0.01 | 0.01 | 0 |
| Composition constraints | | | | | | | | | |
| CaO + SrO | mol.% | 2.509 | 2.510 | 3.000 | 2.000 | 5.400 | 6.389 | 5.370 | 5.040 |
| CaO + MgO | mol.% | 6.018 | 6.000 | 6.470 | 5.490 | 8.590 | 8.579 | 8.631 | 9.372 |
| $Li_2O$ + $Na_2O$ | mol.% | 6.738 | 6.790 | 6.459 | 7.209 | 4.331 | 4.001 | 5.700 | 5.631 |
| $Li_2O$ + MgO | mol.% | 7.368 | 7.410 | 7.030 | 7.810 | 8.711 | 7.381 | 7.721 | 8.082 |
| MgO + ZnO | mol.% | 3.509 | 3.490 | 3.470 | 3.490 | 4.400 | 3.400 | 3.961 | 4.331 |
| $ZrO_2$ + $TiO_2$ + FeO + $Fe_2O_3$ | mol.% | 0.02000 | 0.02000 | 0.02001 | 0.02000 | 0.02000 | 0.02000 | 0.02000 | 0 |
| Measured properties | | | | | | | | | |
| $\alpha_{20-300} \times 10^7$ | $K^{-1}$ | 40.300 | 40.500 | 39.680 | 40.900 | 36.800 | 39.100 | 40.700 | 41.000 |
| Str.P. | °C | 680 | 680 | 684 | 673 | 671 | 675 | 661 | 660 |
| An.P. | °C | 735 | 735 | 739 | 728 | 723 | 726 | 713 | 711 |
| $T_{soft}$ | °C | 1004 | 1002 | 1004 | 998 | 978 | 978 | 972 | 968 |
| $T_{160kP}$ | °C | | | | | 1170 | 1185 | 1180 | |
| $T_{35kP}$ | °C | | | 1304 | 1302 | 1251 | 1270 | 1264 | |
| $T_{200 P}$ | °C | | | 1751 | 1752 | 1669 | 1697 | 1699 | |
| $T_{liq}$ | °C | 1220 | 1235 | 1210 | 1215 | 1200 | 1200 | 1115 | 1140 |
| $\log(\eta_{liq})$ | P | | | | | 4.95 | 5.08 | | |
| E | GPa | 83.640 | 83.770 | 83.640 | 83.500 | 82.740 | 80.530 | 81.360 | 81.840 |
| G | GPa | 34.610 | 34.610 | 34.540 | 34.540 | 34.060 | 33.160 | 33.580 | 33.790 |
| $E/d_{RT}$ | $GPa \cdot cm^3/g$ | 34.830 | 34.860 | 34.760 | 34.850 | 33.500 | 32.700 | 33.600 | 33.860 |
| $d_{RT}$ | $g/cm^3$ | 2.401 | 2.403 | 2.406 | 2.396 | 2.467 | 2.461 | 2.424 | 2.417 |
| Predicted and calculated properties | | | | | | | | | |
| $P_{anort}$ | | 5.4766 | 5.4777 | 5.9747 | 4.9777 | 5.7691 | 7.0232 | 7.3540 | 6.9446 |
| $P_{cord}$ | | 3.4913 | 3.4918 | 3.4920 | 3.4919 | 4.4594 | 3.4596 | 4.0009 | 4.2998 |
| $P_{spod}$ | | 3.9891 | 3.9884 | 3.4905 | 4.4873 | 3.9987 | 3.4987 | 3.2494 | 3.7495 |
| $P_{crist}$ | | 26.882 | 26.580 | 27.880 | 25.888 | 29.371 | 29.844 | 24.238 | 22.339 |

(continued)

| Predicted and calculated properties | | | | | | | | | |
|---|---|---|---|---|---|---|---|---|---|
| $P_{mod}$ | | 0.48826 | 0.19029 | 0.48851 | 0.48940 | -1.7299 | -0.72350 | -0.74642 | -0.17671 |
| $P_{Al}$ | | 0.48826 | 0.19029 | 0.48851 | 0.48940 | 4.0088 | 5.0152 | 4.9933 | 5.4630 |
| $P_{spm}$ [for $E/d_{RT}$] | GPa·cm³/g | 34.31 | 34.35 | 34.25 | 34.36 | 33.53 | 32.97 | 33.35 | 33.65 |
| $P_{anpt}$ [for An.P.] | °C | 722.4 | 723.9 | 728.6 | 715.9 | 747.7 | 746.2 | 723.9 | 716.7 |
| $P_{160kP}$ [for $T_{160kP}$] | °C | 1207 | 1209 | 1213 | 1200 | 1205 | 1194 | 1180 | 1171 |
| $P_{spm}$ - (92.5 - 0.05 * $P_{160kP}$) | | 2.363 | 2.474 | 2.4028 | 2.1532 | 0.9443 | -0.2710 | -0.5716 | -0.2505 |

**Table 6 Continued**

| Exemplary Glass | | 41 | 42 | 43 | 44 | 45 | 46 | 47 | 48 |
|---|---|---|---|---|---|---|---|---|---|
| Composition - mol.% | | | | | | | | | |
| $SiO_2$ | mol.% | 70.53 | 70.58 | 70.58 | 70.68 | 71.03 | 70.03 | 70.86 | 70.89 |
| $Al_2O_3$ | mol.% | 12.38 | 12.32 | 12.32 | 12.30 | 12.34 | 12.67 | 12.74 | 12.76 |
| $Li_2O$ | mol.% | 3.76 | 4.70 | 3.76 | 4.70 | 4.70 | 0 | 0 | 0 |
| CaO | mol.% | 5.03 | 5.04 | 5.99 | 4.99 | 5.04 | 6.20 | 5.71 | 6.21 |
| MgO | mol.% | 4.35 | 4.32 | 4.29 | 4.78 | 4.84 | 5.52 | 5.54 | 5.56 |
| $Na_2O$ | mol.% | 1.88 | 0.97 | 0.97 | 0.97 | 0.96 | 0.96 | 0.96 | 0.96 |
| $P_2O_5$ | mol.% | 1.97 | 1.97 | 1.99 | 1.49 | 0.99 | 0 | 0 | 0 |
| BaO | mol.% | 0 | 0 | 0 | 0 | 0 | 2.67 | 2.68 | 1.67 |
| SrO | mol.% | 0 | 0 | 0 | 0 | 0 | 0.52 | 0.06 | 0.52 |
| $B_2O_3$ | mol.% | 0 | 0 | 0 | 0 | 0 | 0.56 | 0.57 | 0.57 |
| $Y_2O_3$ | mol.% | 0 | 0 | 0 | 0 | 0 | 0.72 | 0.73 | 0.72 |
| $SnO_2$ | mol.% | 0.10 | 0.10 | 0.10 | 0.10 | 0.10 | 0.12 | 0.11 | 0.11 |
| $TiO_2$ | mol.% | 0 | 0 | 0 | 0 | 0 | 0.02 | 0.03 | 0.02 |
| $Fe_2O_3$ | mol.% | 0 | 0 | 0 | 0 | 0 | 0.01 | 0.01 | 0.01 |
| Composition constraints | | | | | | | | | |
| CaO + SrO | mol.% | 5.029 | 5.040 | 5.990 | 4.990 | 5.040 | 6.720 | 5.769 | 6.730 |
| CaO + MgO | mol.% | 9.379 | 9.360 | 10.28 | 9.769 | 9.880 | 11.72 | 11.25 | 11.77 |
| $Li_2O$ + $Na_2O$ | mol.% | 5.641 | 5.670 | 4.730 | 5.669 | 5.659 | 0.9600 | 0.9599 | 0.9601 |
| $Li_2O$ + MgO | mol.% | 8.110 | 9.020 | 8.050 | 9.479 | 9.540 | 5.521 | 5.538 | 5.561 |
| MgO + ZnO | mol.% | 4.349 | 4.320 | 4.290 | 4.780 | 4.841 | 5.521 | 5.538 | 5.561 |

(continued)

| Composition constraints | | | | | | | | | |
|---|---|---|---|---|---|---|---|---|---|
| $ZrO_2 + TiO_2 + FeO + Fe_2O_3$ | mol.% | 0 | 0 | 0 | 0 | 0 | 0.03000 | 0.04000 | 0.03000 |
| Measured properties | | | | | | | | | |
| $\alpha_{20-300} \times 10^7$ | $K^{-1}$ | 41.100 | 40.400 | 39.400 | 40.400 | 40.500 | | | |
| Str.P. | °C | 664 | 660 | 670 | 661 | 660 | | | |
| An.P. | °C | 716 | 711 | 722 | 710 | 711 | | | 791 |
| $T_{soft}$ | °C | 966 | | | | | | | |
| $T_{35kP}$ | °C | 1253 | 1240 | | 1233 | 1237 | 1262 | 1277 | 1274 |
| $T_{200 P}$ | °C | 1685 | 1671 | | 1662 | 1663 | 1636 | 1653 | 1652 |
| $T_{liq}$ | °C | 1115 | 1165 | 1170 | 1160 | 1175 | 1210 | 1235 | 1205 |
| E | GPa | 83.020 | 83.570 | 83.710 | 84.390 | 85.020 | 85.840 | 85.700 | 86.050 |
| G | GPa | 34.270 | 34.410 | 34.480 | 34.750 | 34.890 | | | |
| $E/d_{RT}$ | GPa·cm³/g | 34.260 | 34.520 | 34.460 | 34.760 | 34.960 | 32.900 | 33.000 | 33.500 |
| $d_{RT}$ | g/cm³ | 2.423 | 2.421 | 2.429 | 2.428 | 2.432 | 2.610 | 2.595 | 2.571 |
| Predicted and calculated properties | | | | | | | | | |
| $P_{anort}$ | | 6.9441 | 6.0061 | 6.9464 | 6.0057 | 6.0061 | 8.8396 | 7.9701 | 8.4187 |
| $P_{cord}$ | | 4.3007 | 4.3001 | 4.3002 | 4.8000 | 4.7991 | 5.4077 | 5.4589 | 5.4615 |
| $P_{spod}$ | | 3.7501 | 4.6876 | 3.7490 | 4.6891 | 4.6887 | 0 | 0 | 0 |
| $P_{crist}$ | | 23.153 | 25.039 | 26.906 | 23.779 | 24.282 | 32.678 | 34.944 | 35.071 |
| $P_{mod}$ | | 0.64405 | 0.64939 | 0.64949 | 1.6474 | 2.1449 | 2.3223 | 1.3941 | 1.3349 |
| $P_{Al}$ | | 4.6434 | 4.6484 | 4.6480 | 4.6466 | 4.1441 | 4.1495 | 3.2397 | 3.1816 |
| $P_{spm}$ [for $E/d_{RT}$] | GPa·cm³/g | 33.90 | 34.18 | 34.07 | 34.38 | 34.53 | 33.05 | 33.21 | 33.50 |
| $P_{anpt}$ [for An.P.] | °C | 723.3 | 725.1 | 737.2 | 729.0 | 733.3 | 802.0 | 801.9 | 804.7 |
| $P_{160kP}$ [for $T_{160kP}$] | °C | 1181 | 1182 | 1193 | 1184 | 1191 | 1265 | 1272 | 1272 |
| $P_{spm} - (92.5 - 0.05 * P_{160kP})$ | | 0.5605 | 0.8067 | 1.2564 | 1.1535 | 1.6179 | 3.7767 | 4.3127 | 4.6183 |

**Table 6 Continued**

| Exemplary Glass | | 49 | 50 | 51 | 52 | 53 | 54 | 55 | 56 |
|---|---|---|---|---|---|---|---|---|---|
| Composition - mol.% | | | | | | | | | |
| $SiO_2$ | mol.% | 71.20 | 71.09 | 71.11 | 71.07 | 71.24 | 71.50 | 73.94 | 73.91 |
| $Al_2O_3$ | mol.% | 12.48 | 12.33 | 12.23 | 12.27 | 12.27 | 12.25 | 12.16 | 12.18 |
| $Li_2O$ | mol.% | 3.80 | 3.79 | 3.64 | 3.79 | 3.78 | 3.75 | 4.00 | 3.99 |
| CaO | mol.% | 4.87 | 5.91 | 5.72 | 5.51 | 5.44 | 5.47 | 1.99 | 2.50 |
| MgO | mol.% | 4.68 | 4.81 | 4.60 | 4.43 | 4.35 | 4.42 | 3.97 | 3.46 |
| $Na_2O$ | mol.% | 1.85 | 0.95 | 0.76 | 0.97 | 0.97 | 0.95 | 2.89 | 2.89 |
| $P_2O_5$ | mol.% | 0.99 | 0.99 | 0.99 | 0.99 | 0.99 | 0.70 | 0 | 0 |

(continued)

| Exemplary Glass | | 49 | 50 | 51 | 52 | 53 | 54 | 55 | 56 |
|---|---|---|---|---|---|---|---|---|---|
| Composition - mol.% | | | | | | | | | |
| $B_2O_3$ | mol.% | 0 | 0 | 0.81 | 0.84 | 0.83 | 0.82 | 0.80 | 0.81 |
| $K_2O$ | mol.% | 0.01 | 0.01 | 0.01 | 0.01 | 0.01 | 0.01 | 0.14 | 0.14 |
| $SnO_2$ | mol.% | 0.10 | 0.10 | 0.10 | 0.10 | 0.10 | 0.11 | 0.09 | 0.10 |
| $TiO_2$ | mol.% | 0.01 | 0.01 | 0.01 | 0.01 | 0.01 | 0.01 | 0.01 | 0.01 |
| $Fe_2O_3$ | mol.% | 0.01 | 0.01 | 0.01 | 0.01 | 0.01 | 0.01 | 0.01 | 0.01 |
| Composition constraints | | | | | | | | | |
| CaO + SrO | mol.% | 4.871 | 5.910 | 5.721 | 5.509 | 5.441 | 5.470 | 1.990 | 2.500 |
| CaO + MgO | mol.% | 9.551 | 10.72 | 10.32 | 9.939 | 9.792 | 9.890 | 5.961 | 5.958 |
| $Li_2O$ + $Na_2O$ | mol.% | 5.650 | 4.741 | 4.400 | 4.760 | 4.752 | 4.700 | 6.890 | 6.879 |
| $Li_2O$ + MgO | mol.% | 8.480 | 8.600 | 8.241 | 8.220 | 8.132 | 8.169 | 7.971 | 7.448 |
| MgO + ZnO | mol.% | 4.681 | 4.809 | 4.601 | 4.430 | 4.351 | 4.419 | 3.970 | 3.459 |
| $ZrO_2$ + $TiO_2$ + FeO + $Fe_2O_3$ | mol.% | 0.02000 | 0.02000 | 0.02001 | 0.02000 | 0.02000 | 0.02000 | 0.02000 | 0.02000 |
| Measured properties | | | | | | | | | |
| $\alpha_{20\text{-}300} \times 10^7$ | $K^{-1}$ | 41.500 | 39.800 | 37.400 | 38.400 | 38.100 | 37.600 | 40.900 | 41.700 |
| Str.P. | °C | 665 | 675 | 668 | 664 | 665 | 666 | 659 | 659 |
| An.P. | °C | 717 | 725 | 720 | 716 | 716 | 718 | 715 | 714 |
| $T_{soft}$ | °C | 963 | 968 | 964 | 963 | 961 | 963 | 980 | 980 |
| $T_{35kP}$ | °C | 1239 | 1245 | 1241 | 1242 | 1241 | 1247 | 1286 | 1281 |
| $T_{200\,P}$ | °C | 1666 | 1666 | 1659 | 1662 | 1664 | 1674 | 1733 | 1728 |
| $T_{liq}$ | °C | >1275 | 1190 | 1170 | 1155 | 1160 | 1190 | 1205 | 1165 |
| E | GPa | 84.530 | 85.360 | 84.330 | 84.190 | 84.190 | 84.600 | 82.530 | 82.530 |
| G | GPa | 34.820 | 35.030 | 34.610 | 34.540 | 34.540 | 34.750 | 34.200 | 34.130 |
| $E/d_{RT}$ | $GPa\cdot cm^3/g$ | 34.760 | 34.970 | 34.700 | 34.690 | 34.700 | 34.840 | 34.490 | 34.450 |
| $d_{RT}$ | $g/cm^3$ | 2.432 | 2.441 | 2.430 | 2.427 | 2.426 | 2.428 | 2.393 | 2.396 |
| Predicted and calculated properties | | | | | | | | | |
| $P_{anort}$ | | 6.7259 | 6.8653 | 6.4862 | 6.4844 | 6.4161 | 6.4253 | 4.9500 | 5.4589 |
| $P_{cord}$ | | 4.6808 | 4.8094 | 4.6014 | 4.4298 | 4.3506 | 4.4194 | 3.9704 | 3.4588 |

(continued)

| Predicted and calculated properties | | | | | | | | | |
|---|---|---|---|---|---|---|---|---|---|
| $P_{spod}$ | | 3.7993 | 3.7905 | 3.6395 | 3.7905 | 3.7814 | 3.7499 | 4.0001 | 3.9897 |
| $P_{crist}$ | | 23.399 | 26.324 | 28.988 | 27.935 | 28.474 | 28.748 | 25.856 | 26.134 |
| $P_{mod}$ | | 1.7434 | 2.1504 | 1.5072 | 1.4498 | 1.2944 | 1.6465 | 0.83248 | 0.79928 |
| $P_{Al}$ | | 3.7235 | 4.1305 | 3.4875 | 3.4298 | 3.2743 | 3.0465 | 0.83248 | 0.79928 |
| $P_{spm}$ [for $E/d_{RT}$] | $GPa \cdot cm^3/g$ | 34.29 | 34.44 | 34.33 | 34.29 | 34.29 | 34.38 | 34.18 | 34.11 |
| $P_{anpt}$ [for An.P.] | °C | 732.8 | 745.4 | 739.8 | 734.5 | 734.8 | 737.9 | 711.3 | 711.4 |
| $P_{160kP}$ [for $T_{160kP}$] | °C | 1194 | 1202 | 1201 | 1196 | 1197 | 1201 | 1192 | 1192 |
| $P_{spm}$ - (92.5 - 0.05 * $P_{160kP}$) | | 1.4684 | 2.0544 | 1.8622 | 1.5844 | 1.6495 | 1.9442 | 1.2885 | 1.2018 |

**Table 6 Continued**

| Exemplary Glass | | 57 | 58 | 59 | 60 | 61 | 62 | 63 | 64 | 65 |
|---|---|---|---|---|---|---|---|---|---|---|
| Composition - mol.% | | | | | | | | | | |
| $SiO_2$ | mol.% | 73.98 | 73.74 | 73.22 | 68.62 | 68.50 | 68.59 | 68.79 | 68.88 | 68.93 |
| $Al_2O_3$ | mol.% | 12.18 | 12.85 | 12.59 | 12.26 | 12.57 | 12.28 | 12.41 | 12.34 | 12.27 |
| $Li_2O$ | mol.% | 4.39 | 3.99 | 4.03 | 4.40 | 4.21 | 4.17 | 4.24 | 4.22 | 4.21 |
| CaO | mol.% | 2.00 | 2.01 | 1.99 | 5.26 | 5.36 | 5.02 | 5.53 | 5.33 | 5.06 |
| MgO | mol.% | 3.48 | 3.98 | 3.95 | 4.31 | 4.23 | 4.30 | 4.82 | 4.83 | 4.86 |
| $Na_2O$ | mol.% | 2.91 | 2.88 | 2.88 | 2.05 | 2.03 | 2.06 | 2.05 | 2.05 | 2.06 |
| $P_2O_5$ | mol.% | 0 | 0 | 0 | 1.96 | 1.96 | 1.95 | 1.00 | 0.99 | 0.98 |
| $B_2O_3$ | mol.% | 0.81 | 0 | 0.79 | 1.01 | 1.02 | 1.00 | 1.04 | 0.98 | 1.01 |
| $Y_2O_3$ | mol.% | 0 | 0.30 | 0.30 | 0 | 0 | 0 | 0 | 0 | 0 |
| ZnO | mol.% | 0 | 0 | 0 | 8.00E-4 | 0 | 0.50 | 0 | 0.25 | 0.49 |
| $K_2O$ | mol.% | 0.14 | 0.14 | 0.14 | 0.011 | 0.011 | 0.011 | 0.0102 | 0.0109 | 0.0102 |
| $SnO_2$ | mol.% | 0.09 | 0.09 | 0.09 | 0.0972 | 0.0994 | 0.0995 | 0.10 | 0.0999 | 0.10 |
| $TiO_2$ | mol.% | 0.01 | 0.01 | 0.01 | 0.0065 | 0.0057 | 0.0049 | 0.0064 | 0.0056 | 0.0056 |
| $Fe_2O_3$ | mol.% | 0.01 | 0.01 | 0.01 | 0.0138 | 0.0138 | 0.0134 | 0.014 | 0.014 | 0.0141 |
| Composition constraints | | | | | | | | | | |
| CaO + SrO | mol.% | 2.000 | 2.010 | 1.990 | 5.256 | 5.356 | 5.020 | 5.525 | 5.326 | 5.063 |
| CaO + MgO | mol.% | 5.479 | 5.990 | 5.939 | 9.564 | 9.589 | 9.320 | 10.34 | 10.16 | 9.922 |

(continued)

| Composition constraints | | | | | | | | | | |
|---|---|---|---|---|---|---|---|---|---|---|
| $Li_2O$ + $Na_2O$ | mol.% | 7.298 | 6.869 | 6.910 | 6.448 | 6.241 | 6.236 | 6.290 | 6.276 | 6.261 |
| $Li_2O$ + MgO | mol.% | 7.868 | 7.969 | 7.979 | 8.711 | 8.445 | 8.474 | 9.054 | 9.054 | 9.064 |
| MgO + ZnO | mol.% | 3.479 | 3.980 | 3.949 | 4.309 | 4.233 | 4.796 | 4.816 | 5.081 | 5.354 |
| $ZrO_2$ + $TiO_2$ + FeO + $Fe_2O_3$ | mol.% | 0.01999 | 0.02000 | 0.02000 | 0.02028 | 0.01950 | 0.01830 | 0.02042 | 0.01965 | 0.01967 |
| Measured properties | | | | | | | | | | |
| $\alpha_{20\text{-}300} \times 10^7$ | $K^{-1}$ | 42.700 | 41.200 | 41.100 | 44.700 | 44.200 | 43.200 | 44.300 | 43.300 | 43.000 |
| Str.P. | °C | 655 | 676 | 662 | 631 | 636 | 634 | 635 | 635 | 634 |
| An.P. | °C | 709 | 730 | 716 | 680 | 686 | 683 | 684 | 684 | 683 |
| $T_{soft}$ | °C | 976 | 988 | 975 | 927 | 927 | 927 | 925 | 922 | 923 |
| $T_{35kP}$ | °C | 1283 | 1286 | 1272 | 1207 | 1212 | 1214 | 1200 | 1200 | 1204 |
| $T_{200 P}$ | °C | 1741 | 1723 | 1706 | 1642 | 1644 | 1642 | 1629 | 1626 | 1634 |
| $T_{liq}$ | °C | 1155 | 1210 | 1205 | | | | | | |
| E | GPa | 82.190 | 84.390 | 83.500 | 82.188 | 82.326 | 82.395 | 83.774 | 83.981 | 83.912 |
| G | GPa | 33.990 | 34.820 | 34.410 | 33.854 | 33.923 | 33.923 | 34.406 | 34.475 | 34.475 |
| $E/d_{RT}$ | $GPa \cdot cm^3/g$ | 34.370 | 34.850 | 34.550 | 33.878 | 33.907 | 33.866 | 34.334 | 34.390 | 34.348 |
| $d_{RT}$ | $g/cm^3$ | 2.391 | 2.422 | 2.417 | 2.426 | 2.428 | 2.433 | 2.440 | 2.442 | 2.443 |
| Predicted and calculated properties | | | | | | | | | | |
| $P_{anort}$ | | 4.9792 | 4.9599 | 4.9397 | 7.3063 | 7.3912 | 7.0868 | 7.5816 | 7.3848 | 7.1238 |
| $P_{cord}$ | | 3.4789 | 3.9799 | 3.9490 | 4.3084 | 4.2331 | 4.2999 | 4.8162 | 4.8320 | 4.8593 |
| $P_{spod}$ | | 4.3891 | 3.9891 | 4.0297 | 4.4023 | 4.2117 | 4.1740 | 4.2381 | 4.2223 | 4.2047 |
| $P_{crist}$ | | 25.434 | 25.700 | 25.132 | 17.391 | 18.110 | 18.669 | 16.380 | 16.873 | 17.437 |
| $P_{mod}$ | | 0.73767 | -0.14829 | 0.09976 | 1.7981 | 1.3128 | 1.8309 | 3.2374 | 3.3593 | 3.4366 |
| $P_{Al}$ | | 0.73767 | 0.63166 | 0.88001 | 5.7266 | 5.2259 | 5.7259 | 5.2288 | 5.3414 | 5.3934 |
| $P_{spm}$ [for $E/d_{RT}$] | $GPa \cdot cm^3/g$ | 34.16 | 34.37 | 34.23 | 33.80 | 33.82 | 33.68 | 34.14 | 34.09 | 34.03 |
| $P_{anpt}$ [for An.P.] | °C | 706.0 | 729.2 | 717.6 | 700.2 | 704.5 | 699.3 | 710.4 | 709.1 | 706.5 |
| $P_{160kP}$ [for $T_{160kP}$] | °C | 1187 | 1212 | 1199 | 1149 | 1155 | 1149 | 1159 | 1158 | 1156 |

(continued)

| Exemplary Glass | | 57 | 58 | 59 | 60 | 61 | 62 | 63 | 64 | 65 |
|---|---|---|---|---|---|---|---|---|---|---|
| $P_{spm}$ - (92.5 - 0.05 * $P_{160kP}$) | | | 1.0202 | 2.4542 | 1.663 | -1.263 | -0.9322 | -1.3887 | -0.4037 | -0.5173 | -0.6790 |

Table 7 below lists the compositions and properties for Comparative Glasses C1-C5.

**Table 7. Compositions and Properties of Comparative Example Glasses**

| Comparative Examples | | C1 | C2 | C3 | C4 | C5 |
|---|---|---|---|---|---|---|
| Reference | | [1] | [2] | [3] | [4] | [3] |
| Composition - mol.% | | | | | | |
| $SiO_2$ | mol.% | 69.10 | 71.64 | 63.85 | 68.73 | 65.06 |
| $Al_2O_3$ | mol.% | 13.26 | 13.07 | 16.86 | 11.39 | 16.29 |
| $B_2O_3$ | mol.% | 3.98 | 2.00 | 0 | 4.72 | 0 |
| $Na_2O$ | mol.% | 3.62 | 1.42 | 9.25 | 4.45 | 7.95 |
| $Li_2O$ | mol.% | 7.09 | 6.98 | 7.48 | 4.39 | 7.68 |
| $P_2O_5$ | mol.% | 1.22 | 0 | 2.50 | 1.85 | 2.46 |
| CaO | mol.% | 0.81 | 0 | 0 | 0 | 0 |
| MgO | mol.% | 0.85 | 3.00 | 0 | 3.26 | 0.51 |
| $SnO_2$ | mol.% | 0.0473 | 0.10 | 0.049 | 0.17 | 0.0487 |
| $ZrO_2$ | mol.% | 0.0105 | 0 | 0 | 0.16 | 0 |
| $Fe_2O_2$ | mol.% | 0.0041 | 0 | 0 | 0 | 0 |
| ZnO | mol.% | 0 | 1.80 | 0 | 0.40 | 0 |
| $Ce_2O_3$ | mol.% | 0 | 0 | 0 | 0.096 | 0 |
| $K_2O$ | mol.% | 0 | 0 | 0 | 0.21 | 0 |
| $SiF_4$ | mol.% | 0 | 0 | 0 | 0.0883 | 0 |
| $TiO_2$ | mol.% | 0 | 0 | 0 | 0.0822 | 0 |
| Measured properties | | | | | | |
| $\alpha_{20-300} \times 10^7$ | $K^{-1}$ | | | | 60.000 | |
| Str.P. | °C | 572.00 | 613.00 | 608.00 | | 606.00 |
| An.P. | °C | 626.00 | 666.00 | 661.00 | | 661.00 |
| $T_{soft}$ | °C | | | 924.00 | 900.00 | 926.40 |
| $T_{160kP}$ | °C | | | 1138.3 | 1168.8 | 1139.6 |
| $T_{35kP}$ | °C | | | 1223.1 | 1283.3 | 1226.0 |
| $T_{200P}$ | °C | | | 1659.0 | 2008.0 | 1661.0 |
| $T_{liq}$ | °C | 1145.0 | 1280.0 | 1095.0 | 1100.0 | 1105.0 |
| $\log(\eta_{liq})$ | P | 5.0810 | 4.1430 | 5.5850 | 5.6820 | 5.4990 |

(continued)

| Measured properties | | | | | | |
|---|---|---|---|---|---|---|
| E | GPa | 75.700 | 82.600 | 77.400 | 73.000 | 77.800 |
| G | GPa | | 34.130 | 32.000 | | 32.100 |
| $E/d_{RT}$ | $GPa \cdot cm^3/g$ | | | 32.160 | 30.290 | 32.420 |
| $d_{RT}$ | $g/cm^3$ | | | 2.407 | 2.410 | 2.400 |
| Predicted and calculated properties | | | | | | |
| $P_{spm}$ [for $E/d_{RT}$] | $GPa \cdot cm^3/g$ | 41.04 | 41.59 | 41.70 | 38.24 | 42.03 |
| $P_{anpt}$ [for An.P.] | °C | 639.0 | 689.8 | 612.5 | 624.5 | 625.9 |
| $P_{160kP}$ [for $T_{160kP}$] | °C | 1251 | 1305 | 1217 | 1209 | 1238 |

The reference key for each of the Comparative Glasses listed in Table 7 is as follows: [1] US2019127265; [2] US2020199019; [3] US2019161390; [4] US2020199013.

In some embodiments of the present disclosure, the glass articles can be formed from the melts with the fusion draw process at a viscosity that is close to 160 kP. To enable use of the fusion draw process, the temperature at which the viscosity of the glass is 160 KP ($T_{160kP}$) should be greater than or about equal to the liquidus temperature of glass. At the same time, to be suitable with the HAMR process, the glass should have a high specific modulus.

However, it has been empirically observed that for alumina-rich silicate glasses, it is difficult to achieve a high specific modulus together with a high $T_{160kP}$, while still keeping the liquidus temperature acceptably low to enable high volume manufacturing. Without being bound to a specific theory, it is hypothesized that this difficulty may be caused competing effects of different components on the liquidus temperature, high-temperature viscosity, and specific modulus. Components that increase the specific modulus (such as, for example, MgO, $Li_2O$, $TiO_2$, $Y_2O_3$, $ZrO_2$ and others) tend to either decrease the high-temperature viscosity (as, for example, $Li_2O$), increase the liquidus temperature (as, for example, MgO, $TiO_2$, $ZrO_2$), or both (as, for example, in the case of $Y_2O_3$), thus establishing a trade-off between the three attributes: specific modulus, liquidus temperature and $T_{160kP}$. To balance this trade-off, the glass compositions of some embodiments of the present disclosure contain the components in the combinations and proportions that are specified below.

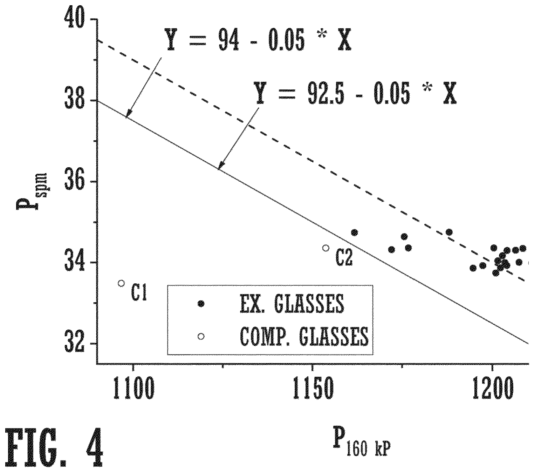

FIG. 4 is a plot showing the relationship between $P_{160kP}$, the parameter that predicts $T_{160kP}$, and the specific modulus parameter $P_{spm}$ for some of the Exemplary Glasses and some of the Comparative Glasses. The Exemplary Glasses (filled circles) are the Examples 7 to 29 from Table 6. The Comparative Glasses (open circles) are the Examples C1 and C2 from Table 7. $P_{160kP}$ was determined according to Formula (XI). The parameter $P_{spm}$ that predicts specific modulus was determined according to Formula (X). All of the Exemplary Glasses and Comparative Glasses shown in FIG. 4 have the features specified in Table 8. In Table 8, the specification "Not limited" refers to a limitation that was not considered when selecting the compositions.

**Table 8. Limitations for glass compositions shown in FIG. 4**

| Quantity | Unit | Min | Max |
|---|---|---|---|
| $SiO_2$ | mol.% | 60 | 75 |
| $Al_2O_3$ | mol.% | 10.5 | 18 |
| CaO | mol.% | 0 | 10 |
| $Li_2O$ | mol.% | 0 | 7.8 |
| MgO | mol.% | 0 | 4.3 |
| $ZrO_2$ | mol.% | 0 | 0.5 |
| $RE_mO_n$ | mol.% | 0 | 5 |
| $P_{spm}$ | $GPa \cdot cm^3/g$ | 25 | Not limited |

(continued)

| Quantity | Unit | Min | Max |
|---|---|---|---|
| $P_{mod}$ | | -3 | Not limited |
| $P_{crist}$ | | Not limited | 28 |
| $P_{anort}$ | | Not limited | 10 |

The Comparative Glasses C1 and C2 depicted in FIG. 4 were selected from among the Comparative Glasses as having the highest specific modulus parameter $P_{spm}$ with a value of $P_{160kP}$ closest to the value of $P_{160kP}$ of the Exemplary Glasses shown in FIG. 4.

The line corresponding to the formula Y = 92.5 - 0.05 * X shown in FIG. 4 (where Y represents $P_{spm}$ and X represents $P_{160kP}$) provides a visual representation of the differences between the Comparative Glasses $C_1$ and $C_2$ and the Exemplary Glasses 7 to 29. As can be seen in FIG. 4, the Exemplary Glasses (filled circles) and none of the Comparative Glasses (open circles) represented in FIG. 4 fall above the line Y = 92.5 - 0.05 * X. In other words, all of the Exemplary Glasses and none of the Comparative Glasses represented in FIG. 4 satisfy the following formula (XII)(a):

$$P_{spm} - (92.5 - 0.05 * P_{160kP}) > 0.00 \quad (XII)(a)$$

As can also be seen in FIG. 4, some of Exemplary Glasses and none of the Comparative Glasses represented in FIG. 4 fall above the line Y = 94 - 0.05 * X, where Y corresponds to $P_{spm}$ and x corresponds to $P_{160kP}$. In other words, some of the Exemplary Glasses and none of the Comparative Glasses represented in FIG. 4 satisfy the following formula (XII)(b):

$$P_{spm} - (94 - 0.05 * P_{160kP}) > 0.00 \quad (XII)(b)$$

The Exemplary Glasses represented in FIG. 4 are, by prediction, superior in terms of the combination of $T_{160kP}$ and $E/d_{RT}$ to the best known Comparative Glasses that have the features specified in Table 8.

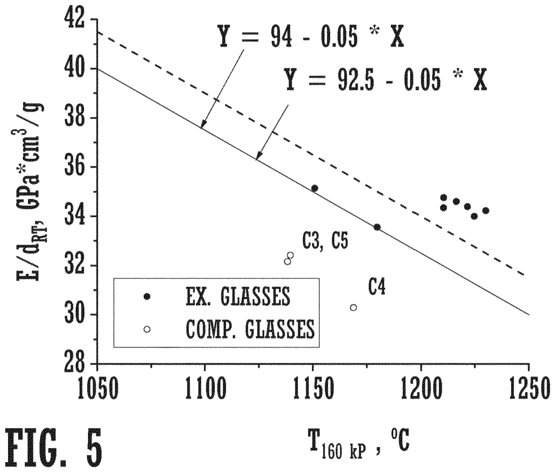

FIG. 5 is a plot showing the relationship between the temperature $T_{160kP}$, the temperature at which the glass has a viscosity of 160 kP, and the specific modulus $E/d_{RT}$ for some of the Exemplary Glasses and some of the Comparative Glasses. The Exemplary Glasses (filled circles) are the Examples 7 to 12, 15 and 39 from Table 6. The Comparative Glasses (open circles) are the Examples C3 to C5 from Table 7. All of the Exemplary Glasses and Comparative Glasses shown in FIG. 5 have the features specified in Table 9. In Table 9, the specification "Not limited" refers to a limitation that was not considered when selecting the compositions. In FIG. 5, some of the above-enumerated compositions may be labeled for better visibility, some others may not, and some more glasses may not be shown, which does not affect the further conclusions.

**Table 9. Limitations for glass compositions shown in FIG. 5**

| Quantity | Unit | Min | Max |
|---|---|---|---|
| $SiO_2$ | mol.% | 60 | 75 |
| $Al_2O_3$ | mol.% | 10.5 | 18 |
| CaO | mol.% | 0 | 10 |
| $Li_2O$ | mol.% | 0 | 7.8 |
| MgO | mol.% | 0 | 4.3 |
| $ZrO_2$ | mol.% | 0 | 0.5 |
| $RE_mO_n$ | mol.% | 0 | 5 |
| E/d | GPa·cm³/g | 25 | Not limited |
| $P_{mod}$ | | -3 | Not limited |

(continued)

| Quantity | Unit | Min | Max |
|---|---|---|---|
| $P_{crist}$ | | Not limited | 28 |
| $P_{anort}$ | | Not limited | 10 |

The Comparative Glasses C3, C4, and C5 shown in FIG. 5 were selected from among the Comparative Glasses as having the highest measured values of the specific modulus $E/d_{RT}$ with a value of $T_{160kP}$ closest to the value of $T_{160kP}$ of the Exemplary Glasses shown in FIG. 5.

The line corresponding to the formula Y = 92.5 - 0.05 * X (where Y corresponds to $E/d_{RT}$ and X corresponds to $T_{160kP}$) shown in FIG. 5 provides a visual representation of the differences between the Comparative Glasses C3, C4, and C5 and the Exemplary Glasses 7 to 12, 15 and 39. As can be seen in FIG. 5, the all of the Exemplary Glasses (filled circles) and none of the Comparative Glasses (open circles) represented in FIG. 5 fall above the line Y = 92.5 - 0.05 * X. In other words, some of the Exemplary Glasses and none of the Comparative Glasses represented in FIG. 5 satisfy the following formula (XIII)(a):

$$E/d - (92.5 - 0.05 * T_{160kP}) > 0.00 \quad (XIII)(a)$$

As can also be seen in FIG. 5, some of the Exemplary Glasses and none of the Comparative Glasses represented in FIG. 5 fall above the line Y = 94 - 0.05 * X. In other words, some of the Exemplary Glasses and none of the Comparative Glasses represented in FIG. 5 satisfy the following formula (XIII)(b):

$$E/d_{RT} - (94 - 0.05 * T_{160kP}) > 0.00 \quad (XIII)(b)$$

The Exemplary Examples represented in FIG. 5 that satisfy the formula (XIII)(b) are characterized by the highest values of $E/d_{RT}$ at comparable values of $T_{160kP}$ among the glasses that have the features specified in Table 9.

This means that, under the conditions specified in Table 9, some of the Exemplary Glasses have higher measured values of the specific modulus $E/d_{RT}$ at comparable measured values of the temperature $T_{160kP}$ than the best of the Comparative Glasses satisfying the same conditions. The Exemplary Glasses, according to measurements, have higher values of $E/d_{RT}$ at comparable values of $T_{160kP}$ than the best of the Comparative Glasses that have the features specified in Table 9.

The values of all attributes specified in Tables 8 and 9 and Formulas (XII)(a), (XII)(b), (XIII)(a) and (XIII)(b) for the Comparative Glasses C1 to C5 plotted in FIGS 4 and 5 are presented in Table 10 below.

**Table 10. Attributes of Comparative Example Glasses Having the Features of Tables 8 and 9**

| Ex. # | | C1 | C2 | C3 | C4 | C5 |
|---|---|---|---|---|---|---|
| Composition | | | | | | |
| $Al_2O_3$ | mol.% | 13.26 | 13.07 | 16.86 | 11.39 | 16.29 |
| CaO | mol.% | 0.81 | 0 | 0 | 0 | 0 |
| $Li_2O$ | mol.% | 7.10 | 6.98 | 7.47 | 4.39 | 7.68 |
| $RE_mO_n$ | mol.% | 0 | 0 | 0 | 0.0953 | 0 |
| MgO | mol.% | 0.85 | 3.00 | 0 | 3.26 | 0.51 |
| $ZrO_2$ | mol.% | 0.011 | 0 | 0 | 0.16 | 0 |
| Measured properties | | | | | | |
| $P_{mod}$ | | | | -2.6347 | -0.6289 | -2.6044 |
| $P_{crist}$ | | | | -21.58 | 15.08 | -14.68 |
| $P_{anort}$ | | | | 9.2567 | 4.5523 | 7.9535 |

(continued)

| Measured properties | | | | | | |
|---|---|---|---|---|---|---|
| $T_{160kP}$ | °C | | | 1138 | 1169 | 1140 |
| E/d | GPa·cm³/g | | | 32.16 | 30.29 | 32.42 |
| E/d - (92.5 - 0.05 * $T_{160kP}$) | | | | -3.4275 | -3.769 | -3.101 |
| E/d - (94 - 0.05 * $T_{160kP}$) | | | | -4.9275 | -5.269 | -4.601 |
| Predicted and calculated pro perties | | | | | | |
| $P_{160kP}$ | | 1097 | 1154 | 1047 | 1079 | 1063 |
| $P_{spm}$ | | 33.49 | 34.36 | 32.92 | 32.63 | 33.19 |
| $P_{spm}$ - (92.5 - 0.05 * $P_{160kP}$) | | -4.1728 | -0.4556 | -7.2483 | -5.9271 | -6.1570 |
| $P_{spm}$ - (94 - 0.05 * $P_{160kP}$) | | -5.6728 | -1.9556 | -8.7483 | -7.4271 | -7.6570 |

As follows from FIGS. 4 and 5, both predicted and measured property data confirms that some of the Exemplary Glasses have better combination of modifier-binding parameter $P_{mod}$, temperature $T_{160kP}$ and specific modulus $E/d_{RT}$ than the best of the Comparative Glasses that have the features specified in Tables 8 and 9 accordingly.

**Claims**

1. A glass comprising a plurality of components, the glass having a composition of the components comprising:

   • greater than or equal to 60.0 mol.°/ and less than or equal to 80.0 mol.°/ $SiO_2$,
   • greater than or equal to 10.0 mol.°/ and less than or equal to 18.0 mol.% $Al_2O_3$,
   • greater than or equal to 0.5 mol.°/ and less than or equal to 7.5 mol.% $Li_2O$,
   • greater than or equal to 0.0 mol.°/ and less than or equal to 0.5 mol.% $ZrO_2$,
   • greater than or equal to 0.0 mol.°/ and less than or equal to 3.0 mol.% $RE_mO_n$,
   • greater than or equal to 0.0 at.% and less than or equal to 0.5 at.% F and
   • optionally comprising one or more components selected from $P_2O_5$, $B_2O_3$, MgO, CaO, BaO, ZnO, MnO, $Na_2O$, $K_2O$, $Fe_2O_3$, FeO, $Cu_2O$, $Rb_2O$, $Ag_2O$, $Cs_2O$, $Au_2O$, $Hg_2O$, $Tl_2O$, BeO, CoO, NiO, CuO, SrO, CdO, SnO, PbO and $TiO_2$,

   wherein the composition of the components satisfies the condition:

   •

   $$0.00 \leq \min(RE_mO_n, P_2O_5) \text{ [mol.%]} \leq 0.30,$$

   and wherein the glass has
   • a cristobalite precipitation parameter $P_{crist}$ that is less than or equal to 28,
   • an anorthite precipitation parameter $P_{anort}$ that is less than or equal to 10,
   • a cordierite precipitation parameter $P_{cord}$ that is less than or equal to 5.0 and
   • a spodumene precipitation parameter $P_{spod}$ that is less than or equal to 7.5,
   where
   • $P_{crist}$ is calculated from the glass composition in terms of mol.% of the components according to the following formula:

   $$P_{crist} = SiO_2 - 6 * (Na_2O + K_2O) - 4 * Li_2O - 2 * (CaO + SrO + BaO) - 2.5 * MgO,$$

   • $P_{anort}$ is calculated from the glass composition in terms of mol.% of the components according to the following formula:

$$P_{anort} = \min(CaO + SrO + 0.5 * BaO + Na_2O + 0.5 * K_2O, Al_2O_3),$$

• $P_{cord}$ is calculated from the glass composition in terms of mol.% of the components according to the following formula:

$$P_{cord} = MgO + MnO + FeO,$$

• $P_{spod}$ is calculated from the glass composition in terms of mol.% of the components according to the following formula:

$$P_{spod} = \min(Li_2O, Al_2O_3 - K_2O - 0.5 * Na_2O)$$

and wherein the glass satisfies the conditions:

•

$$P_{spm} > 32,$$

•

$$P_{anpt} > 680$$

and

•

$$P_{160kP} > 1200,$$

where
• $P_{anpt}$ is an annealing point parameter, calculated from the glass composition in terms of mol.% of the components according to the Formula (I):

$P_{anpt} = 664.7 + 5.2303 * SiO_2 - 11.493 * B_2O_3 - 7.1742 * P_2O_5 + 8.3980 *$
$ZrO_2 - 2.0585 * MgO - 2.1088 * CaO - 3.8995 * BaO - 10.323 * ZnO - 9.0727$
$* MnO - 23.455 * Li_2O - 33.819 * Na_2O - 25.204 * K_2O + 15.745 * Y_2O_3 +$     (I)
$8.9047 * La_2O_3 - 33.960 * (Fe_2O_3 + FeO) - 5.6704 * (R_2O + RO - Al_2O_3) -$
$4.2545 * (SiO_2 - (6 * K_2O + 6 * Na_2O + 4 * Li_2O + 2 * RO)) - 19.439 * Cu_2O,$

• $P_{spm}$ is a specific modulus parameter, calculated from the glass composition in terms of mol.% of the components according to the Formula (II):

$P_{spm} = 32.10 + 0.47744 * SiO_2 - 1.6506 * Al_2O_3 - 0.11775 * B_2O_3 - 0.30166$
$* P_2O_5 + 0.20187 * TiO_2 + 0.20219 * ZrO_2 + 0.96268 * MgO + 0.83379 *$
$CaO + 0.53685 * SrO + 0.41218 * BaO + 0.63264 * ZnO + 0.75365 * MnO$
$+ 0.62984 * CuO - 1.2496 * Na_2O - 1.5154 * K_2O + 1.4746 * Cu_2O - 0.037941$     (II)
$* Y_2O_3 - 0.75836 * La_2O_3 - 1.8052 * (R_2O + RO - Al_2O_3) - 0.47488 * (SiO_2$
$- (6 * K_2O + 6 * Na_2O + 4 * Li_2O + 2 * RO)),$

• $P_{160kP}$ is a parameter predicting the temperature at which the glass has a viscosity of 160 kP, calculated from the glass composition in terms of mol.% of the components according to the Formula (III):

$$P_{160kP} = 1058 + 2.5492 * SiO_2 - 25.725 * Al_2O_3 - 11.327 * B_2O_5 - 14.309 * TiO_2 - 11.594 * ZrO_2 + 30.559 * MgO + 29.290 * CaO + 30.592 * SrO + 30.079 * BaO + 23.323 * ZnO + 19.724 * MnO + 11.888 * PbO + 11.462 * CuO + 17.090 * Li_2O + 16.475 * Na_2O + 11.386 * K_2O + 14.422 * Y_2O_3 - 36.909* La_2O_3 - 34.144 * (Fe_2O_3 + FeO) - 35.001 * (R_2O + RO - Al_2O_3),$$

(III)

where $R_2O$ is a total sum of monovalent metal oxides, RO is a total sum of divalent metal oxides, $RE_mO_n$ is a total sum of rare earth metal oxides in all redox states present, min(A,B) means the lesser of the values A and B, and an asterisk (*) means multiplication.

2. The glass of claim 1, wherein

• $P_{crist}$ is less than or equal to 28,
• $P_{anort}$ is less than or equal to 10,
• $P_{cord}$ is less than or equal to 5.0,
• $P_{spod}$ is less than or equal to 7.5,
and wherein the glass has
• a specific modulus $E/d_{RT}$ that is greater than or equal to 32 GPa·cm$^3$/g,
• an annealing point An.P. that is greater than or equal to 680 °C and
• a temperature $T_{160kP}$ at which the glass has a viscosity of 160 kP that is greater than or equal to 1200 °C,

where E is a Young's modulus and $d_{RT}$ is a density.

3. The glass of claim 1 or 2, wherein the composition of the components comprises:

• greater than or equal to 60.0 mol.°/ and less than or equal to 75.0 mol.°/ $SiO_2$,
• greater than or equal to 0.3 mol.°/ and less than or equal to 7.5 mol.% CaO,
• greater than or equal to 0.0 mol.°/ and less than or equal to 5.0 mol.% MgO,
• greater than or equal to 0.0 mol.°/ and less than or equal to 5.0 mol.% $Na_2O$,
• greater than or equal to 0.0 mol.°/ and less than or equal to 4.0 mol.% $P_2O_5$,
• greater than or equal to 0.0 mol.°/ and less than or equal to 0.5 mol.% $SnO_2$ and
• greater than or equal to 0.0 mol.°/ and less than or equal to 0.3 mol.% $Fe_2O_3$.

4. The glass of any one of claims 1-3, wherein the glass has

• a logarithm of liquidus viscosity $\log(\eta_{liq}$ [P]) that is greater than or equal to 5.0.
•

$$P_{spm} > 33.$$

• a temperature $T_{200P}$ at which the glass has a viscosity of 200 Poise that is less than or equal to 1700 °C.

**Patentansprüche**

1. Glas, umfassend eine Vielzahl von Komponenten, wobei das Glas eine Zusammensetzung der Komponenten aufweist, umfassend:

• zu größer als oder gleich 60,0 Mol-% und zu kleiner als oder gleich 80,0 Mol-% $SiO_2$,
• zu größer als oder gleich 10,0 Mol-% und zu kleiner als oder gleich 18,0 Mol-% $Al_2O_3$,
• zu größer als oder gleich 0,5 Mol-% und zu kleiner als oder gleich 7,5 Mol-% $Li_2O$,
• zu größer als oder gleich 0,0 Mol-% und zu kleiner als oder gleich 0,5 Mol-% $ZrO_2$,

• zu größer als oder gleich 0,0 Mol-% und zu kleiner als oder gleich 3,0 Mol-% $RE_mO_n$,
• zu größer als oder gleich 0,0 Atom-% und zu kleiner als oder gleich 0,5 Atom-% F und
• optional umfassend eine oder mehrere Komponenten, die aus $P_2O_5$, $B_2O_3$, MgO, CaO, BaO, ZnO, MnO, $Na_2O$, $K_2O$, $Fe_2O_3$, FeO, $Cu_2O$, $Rb_2O$, $Ag_2O$, $Cs_2O$, $Au_2O$, $Hg_2O$, $Tl_2O$, BeO, CoO, NiO, CuO, SrO, CdO, SnO, PbO und $TiO_2$ ausgewählt sind,

wobei die Zusammensetzung der Komponenten die Bedingung erfüllt:

•

$$0,00 \leq \min(RE_mO_n, P_2O_5) \, [Mol\%] < 0,30,$$

und wobei das Glas aufweist
• einen Cristobalit-Ausfällungsparameter $P_{Crist}$, der kleiner als oder gleich 28 ist,
• ein Anorthit-Ausfällungsparameter $P_{Anort}$, der kleiner als oder gleich 10 ist,
• ein Cordierit-Ausfällungsparameter $P_{Cord}$, der kleiner als oder gleich 5,0 ist, und
• einen Spodumen-Ausfällungsparameter $P_{Spod}$, der kleiner als oder gleich 7,5 ist,
wo
• $P_{Crist}$ aus der Glaszusammensetzung hinsichtlich der Mol-% der Komponenten gemäß der folgenden Formel berechnet wird:

$$P_{Crist} = SiO_2 - 6 * (Na_2O + K_2O) - 4 * Li_2O - 2 * (CaO + SrO + BaO) - 2,5 * MgO,$$

• $P_{Anort}$ aus der Glaszusammensetzung hinsichtlich der Mol-% der Komponenten gemäß der folgenden Formel berechnet wird:

$$P_{Anort} = \min(CaO + SrO + 0,5 * BaO + Na_2O + 0,5 * K_2O, Al_2O_3),$$

• $P_{Cord}$ aus der Glaszusammensetzung hinsichtlich der Mol-% der Komponenten gemäß der folgenden Formel berechnet wird:

$$P_{Cord} = MgO + MnO + FeO,$$

• $P_{Spod}$ aus der Glaszusammensetzung hinsichtlich der Mol-% der Komponenten gemäß der folgenden Formel berechnet wird:

$$P_{Spod} = \min(Li_2O, Al_2O_3 - K_2O - 0,5 * Na_2O)$$

und wobei das Glas die Bedingungen erfüllt:

•

$$P_{spm} > 32,$$

•

$$P_{Anpt} > 680$$

und
•

$$P_{160kP} > 1200,$$

wo

• $P_{Anpt}$ ein Annealing-Point-Parameter ist, der aus der Glaszusammensetzung hinsichtlich der Mol-% der Komponenten gemäß Formel (I) berechnet wird:

$$P_{Anpt} = 664.7 + 5.2303 * SiO_2 - 11.493 * B_2O_3 - 7.1742 * P_2O_5 + 8.3980 * ZrO_2 - 2.0585 * MgO - 2.1088 * CaO - 3.8995 * BaO - 10.323 * ZnO - 9.0727 * MnO - 23.455 * Li_2O - 33.819 * Na_2O - 25.204 * K_2O + 15.745 * Y_2O_3 + 8.9047 * La_2O_3 - 33.960 * (Fe_2O_3 + FeO) - 5.6704 * (R_2O + RO - Al_2O_3) - 4.2545 * (SiO_2 - (6 * K_2O + 6 * Na_2O + 4 * Li_2O + 2 * RO)) - 19.439 * Cu_2O, \quad (I)$$

• $P_{Spm}$ ein spezifischer Modusparameter ist, der aus der Glaszusammensetzung hinsichtlich der Mol-% der Komponenten gemäß Formel (II) berechnet wird:

$$P_{spm} = 32.10 + 0.47744 * SiO_2 - 1.6506 * Al_2O_3 - 0.11775 * B_2O_3 - 0.30166 * P_2O_5 + 0.20187 * TiO_2 + 0.20219 * ZrO_2 + 0.96268 * MgO + 0.83379 * CaO + 0.53685 * SrO + 0.41218 * BaO + 0.63264 * ZnO + 0.75365 * MnO + 0.62984 * CuO - 1.2496 * Na_2O - 1.5154 * K_2O + 1.4746 * Cu_2O - 0.037941 * Y_2O_3 - 0.75836 * La_2O_3 - 1.8052 * (R_2O + RO - Al_2O_3) - 0.47488 * (SiO_2 - (6 * K_2O + 6 * Na_2O + 4 * Li_2O + 2 * RO)), \quad (II)$$

• $P_{160kp}$ ein Parameter ist, der die Temperatur vorhersagt, bei der das Glas eine Viskosität von 160 kP aufweist, die aus der Glaszusammensetzung in Mol-% der Komponenten gemäß der Formel (III) berechnet wird:

$$P_{160kP} = 1058 + 2.5492 * SiO_2 - 25.725 * Al_2O_3 - 11.327 * B_2O_5 - 14.309 * TiO_2 - 11.594 * ZrO_2 + 30.559 * MgO + 29.290 * CaO + 30.592 * SrO + 30.079 * BaO + 23.323 * ZnO + 19.724 * MnO + 11.888 * PbO + 11.462 * CuO + 17.090 * Li_2O + 16.475 * Na_2O + 11.386 * K_2O + 14.422 * Y_2O_3 - 36.909 * La_2O_3 - 34.144 * (Fe_2O_3 + FeO) - 35.001 * (R_2O + RO - Al_2O_3), \quad (III)$$

wobei $R_2O$ die Gesamtsumme einwertiger Metalloxide ist, RO die Gesamtsumme zweiwertiger Metalloxide ist, $RE_mO_n$ die Gesamtsumme der Seltenerdmetalloxide in allen vorhandenen Redoxzuständen ist, min(A,B) den kleineren der Werte A und B bedeutet und ein Sternchen (*) eine Multiplikation bedeutet.

2. Glas nach Anspruch 1, wobei

• $P_{Crist}$ kleiner als oder gleich 28 ist,
• $P_{Anort}$ kleiner als oder gleich 10 ist,
• $P_{Cord}$ kleiner als oder gleich 5,0 ist,
• $P_{Spod}$ kleiner als oder gleich 7,5 ist,
und wobei das Glas aufweist
• einen spezifischen Modul $E/d_{RT}$, der größer als oder gleich 32 GPa cm$^3$/g ist,
• einen Annealing Point An.P., der größer als oder gleich 680 °C ist, und
• eine Temperatur $T_{160kp}$, bei der das Glas eine Viskosität von 160 kP aufweist, die größer als oder gleich 1200 °C ist,

wobei E ein Elastizitätsmodul und $d_{RT}$ eine Dichte ist.

3. Glas nach Anspruch 1 oder 2, wobei die Zusammensetzung der Komponenten umfasst:

- zu größer als oder gleich 60,0 Mol-% und zu kleiner als oder gleich 75,0 Mol-% SiO$_2$,
- zu größer als oder gleich 0,3 Mol-% und zu kleiner als oder gleich 7,5 Mol-% CaO,
- zu größer als oder gleich 0,0 Mol-% und zu kleiner als oder gleich 5,0 Mol-% MgO,
- zu größer als oder gleich 0,0 Mol-% und zu kleiner als oder gleich 5,0 Mol-% Na$_2$O,
- zu größer als oder gleich 0,0 Mol-% und zu kleiner als oder gleich 4,0 Mol-% P$_2$O$_5$,
- zu größer als oder gleich 0,0 Mol-% und zu kleiner als oder gleich 0,5 Mol-% SnO$_2$ und
- zu größer als oder gleich 0,0 Mol-% und zu kleiner als oder gleich 0,3 Mol-% Fe$_2$O$_3$.

4. Glas nach einem der Ansprüche 1 bis 3, wobei das Glas aufweist

- ein Logarithmus einer Liquidusviskosität log($\eta_{Liq}$ [P]), der größer als oder gleich 5,0 ist.
-

$$P_{spm} > 33.$$

- eine Temperatur T$_{200P}$, bei der das Glas eine Viskosität von 200 Poise aufweist, die kleiner als oder gleich 1700 °C ist.

**Revendications**

1. Verre comprenant une pluralité de composants, le verre ayant une composition des composants comprenant :

- une quantité supérieure ou égale à 60,0 % mol. et inférieure ou égale à 80,0 % mol. de SiO$_2$,
- une quantité supérieure ou égale à 10,0 % mol. et inférieure ou égale à 18,0 % mol. de Al$_2$O$_3$,
- une quantité supérieure ou égale à 0,5 % mol. et inférieure ou égale à 7,5 % mol. de Li$_2$O,
- une quantité supérieure ou égale à 0,0 % mol. et inférieure ou égale à 0,5 % mol. de ZrO$_2$,
- une quantité supérieure ou égale à 0,0 % mol. et inférieure ou égale à 3,0 % mol. de RE$_m$O$_n$,
- une quantité supérieure ou égale à 0,0 % at. et inférieure ou égale à 0,5 % at. de F et
- comprenant facultativement un ou plusieurs composants choisis parmi P$_2$O$_5$, B$_2$O$_3$, MgO, CaO, BaO, ZnO, MnO, Na$_2$O, K$_2$O, Fe$_2$O$_3$, FeO, Cu$_2$O, Rb$_2$O, Ag$_2$O, Cs$_2$O, Au$_2$O, Hg$_2$O, Tl$_2$O, BeO, CoO, NiO, CuO, SrO, CdO, SnO, PbO et TiO$_2$,

dans lequel la composition des composants respecte la condition :

-

$$0,00 \leq min(RE_mO_n, P_2O_5) \ [\% \ mol.] < 0,30,$$

et dans lequel le verre a
- un paramètre de précipitation de cristobalite P$_{crist}$ qui est inférieur ou égal à 28,
- un paramètre de précipitation d'anorthite P$_{anort}$ qui est inférieur ou égal à 10,
- un paramètre de précipitation de cordiérite P$_{cord}$ qui est inférieur ou égal à 5,0 et
- un paramètre de précipitation de spodumène P$_{spod}$ qui est inférieur ou égal à 7,5,
où
- P$_{crist}$ est calculé à partir de la composition de verre en termes de % mol. des composants selon la formule suivante :

$$P_{crist} = SiO_2 - 6 * (Na_2O + K_2O) - 4 * Li_2O - 2 * (CaO + SrO + BaO) - 2,5 * MgO,$$

- P$_{anort}$ est calculé à partir de la composition de verre en termes de % mol. des composants selon la formule suivante :

$$P_{anort} = min(CaO + SrO + 0,5 * BaO + Na_2O + 0,5 * K_2O, Al_2O_3),$$

• $P_{cord}$ est calculé à partir de la composition de verre en termes de % mol. des composants selon la formule suivante :

$$P_{cord} = MgO + MnO + FeO,$$

• $P_{spod}$ est calculé à partir de la composition de verre en termes de % mol. des composants selon la formule suivante :

$$P_{spod} = min(Li_2O, Al_2O_3 - K_2O - 0{,}5 * Na_2O)$$

et dans lequel le verre respecte les conditions :

• 

$$P_{spm} > 32,$$

• 

$$P_{anpt} > 680$$

et
• 

$$P_{160kP} > 1200,$$

où
• $P_{anpt}$ est un paramètre de point de recuit, calculé à partir de la composition de verre en termes de % mol. des composants selon la Formule (I) :

$$P_{anpt} = 664.7 + 5.2303 * SiO_2 - 11.493 * B_2O_3 - 7.1742 * P_2O_5 + 8.3980 * ZrO_2 - 2.0585 * MgO - 2.1088 * CaO - 3.8995 * BaO - 10.323 * ZnO - 9.0727 * MnO - 23.455 * Li_2O - 33.819 * Na_2O - 25.204 * K_2O + 15.745 * Y_2O_3 + 8.9047 * La_2O_3 - 33.960 * (Fe_2O_3 + FeO) - 5.6704 * (R_2O + RO - Al_2O_3) - 4.2545 * (SiO_2 - (6 * K_2O + 6 * Na_2O + 4 * Li_2O + 2 * RO)) - 19.439 * Cu_2O, \tag{I}$$

• $P_{Spm}$ est un paramètre de module spécifique, calculé à partir de la composition de verre en termes de % mol. des composants selon la Formule (II) :

$$P_{spm} = 32.10 + 0.47744 * SiO_2 - 1.6506 * Al_2O_3 - 0.11775 * B_2O_3 - 0.30166 * P_2O_5 + 0.20187 * TiO_2 + 0.20219 * ZrO_2 + 0.96268 * MgO + 0.83379 * CaO + 0.53685 * SrO + 0.41218 * BaO + 0.63264 * ZnO + 0.75365 * MnO + 0.62984 * CuO - 1.2496 * Na_2O - 1.5154 * K_2O + 1.4746 * Cu_2O - 0.037941 * Y_2O_3 - 0.75836 * La_2O_3 - 1.8052 * (R_2O + RO - Al_2O_3) - 0.47488 * (SiO_2 - (6 * K_2O + 6 * Na_2O + 4 * Li_2O + 2 * RO)), \tag{II}$$

• $P_{160kp}$ est un paramètre prédisant la température à laquelle le verre a une viscosité de 160 kP, calculé à partir de la composition de verre en termes de % mol. des composants selon la Formule (III) :

$P_{160kP}$ = 1058 + 2.5492 * $SiO_2$ - 25.725 * $Al_2O_3$ - 11.327 * $B_2O_5$ - 14.309 * $TiO_2$ - 11.594 * $ZrO_2$ + 30.559 * MgO + 29.290 * CaO + 30.592 * SrO + 30.079 * BaO + 23.323 * ZnO + 19.724 * MnO + 11.888 * PbO + 11.462 * CuO + 17.090 * $Li_2O$ + 16.475 * $Na_2O$ + 11.386 * $K_2O$ + 14.422 * $Y_2O_3$ - 36.909* $La_2O_3$ - 34.144 * ($Fe_2O_3$ + FeO) - 35.001 * ($R_2O$ + RO - $Al_2O_3$),　　　　(III)

où $R_2O$ est une somme totale d'oxydes de métaux monovalents, RO est une somme totale d'oxydes de métaux divalents, $RE_mO_n$ est une somme totale d'oxydes de métaux de terres rares dans tous les états redox présents, min(A,B) désigne la plus petite de valeurs A et B, et un astérisque (*) désigne une multiplication.

2. Verre selon la revendication 1, dans lequel

- $P_{crist}$ est inférieur ou égal à 28,
- $P_{anort}$ est inférieur ou égal à 10,
- $P_{cord}$ est inférieur ou égal à 5,0,
- $P_{spod}$ est inférieur ou égal à 7,5,

et dans lequel le verre a
- un module spécifique $E/d_{RT}$ qui est supérieur ou égal à 32 GPa·cm$^3$/g,
- un point de recuit An.P. qui est supérieur ou égal à 680 °C et
- une température $T_{160kp}$ à laquelle le verre a une viscosité de 160 kP qui est supérieure ou égale à 1200 °C,

où E est un module de Young et $d_{RT}$ est une masse volumique.

3. Verre selon la revendication 1 ou 2, dans lequel la composition des composants comprend :

- une quantité supérieure ou égale à 60,0 % mol. et inférieure ou égale à 75,0 % mol. de $SiO_2$,
- une quantité supérieure ou égale à 0,3 % mol. et inférieure ou égale à 7,5 % mol. de CaO,
- une quantité supérieure ou égale à 0,0 % mol. et inférieure ou égale à 5,0 % mol. de MgO,
- une quantité supérieure ou égale à 0,0 % mol. et inférieure ou égale à 5,0 % mol. de $Na_2O$,
- une quantité supérieure ou égale à 0,0 % mol. et inférieure ou égale à 4,0 % mol. de $P_2O_5$,
- une quantité supérieure ou égale à 0,0 % mol. et inférieure ou égale à 0,5 % mol. de $SnO_2$ et
- une quantité supérieure ou égale à 0,0 % mol. et inférieure ou égale à 0,3 % mol. de $Fe_2O_3$.

4. Verre selon l'une quelconque des revendications 1 à 3, dans lequel le verre a

- un logarithme de viscosité liquidus log($\eta_{liq}$ [P]) qui est supérieur ou égal à 5,0.
- 

$$P_{spm} > 33.$$

- une température $T_{200P}$ à laquelle le verre a une viscosité de 200 Poises qui est inférieure ou égale à 1700 °C.

FIG. 1

FIG. 2

FIG. 3

$$Y = 94 - 0.05 * X$$

$$Y = 92.5 - 0.05 * X$$

| | |
|---|---|
| ● | EX. GLASSES |
| ○ | COMP. GLASSES |

FIG. 4

$P_{160 \ kP}$

FIG. 5

$Y = 94 - 0.05 * X$

$Y = 92.5 - 0.05 * X$

EX. GLASSES
COMP. GLASSES

C3, C5

C4

$E/d_{RT}$, GPa*cm$^3$/g

$T_{160\ kP}$, $^{\circ}$C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020199019 A1
- US 2019127265 A
- US 2020199019 A
- US 2019161390 A
- US 2020199013 A

**Non-patent literature cited in the description**

- Phase Equilibrium Relations of the Common Rock-Forming Oxides Except Water. **G.W.MOREY.** Data of Geochemistry. United States Government Printing Office, 1964, 173